(19) Europäisches Patentamt
European Patent Office
Office européen des brevets

(11) EP 1 798 795 B1

(12) EUROPEAN PATENT SPECIFICATION

(45) Date of publication and mention of the grant of the patent:
**22.08.2012 Bulletin 2012/34**

(21) Application number: **05781471.7**

(22) Date of filing: **30.08.2005**

(51) Int Cl.:
***H01M 8/02*** *(2006.01)* ***H01M 8/10*** *(2006.01)*
***C08L 101/12*** *(2006.01)* ***C08J 5/22*** *(2006.01)*
***H01B 1/06*** *(2006.01)* ***H01B 1/12*** *(2006.01)*

(86) International application number:
**PCT/JP2005/015703**

(87) International publication number:
**WO 2006/025351 (09.03.2006 Gazette 2006/10)**

(54) **POLYELECTROLYTE MATERIAL, POLYELECTROLYTE COMPONENT, MEMBRANE ELECTRODE COMPOSITE BODY, AND POLYELECTROLYTE TYPE FUEL CELL**

POLYELEKTROLYTMATERIAL, POLYELEKTROLYTKOMPONENTE, MEMBRANELEKTRODEN-VERBUNDKÖRPER UND BRENNSTOFFZELLE DES POLYELEKTROLYTTYPS

MATÉRIAU POLYÉLECTROLYTE, COMPOSANT POLYÉLECTROLYTE, CORPS COMPOSITE D'ÉLECTRODE À MEMBRANE ET PILE À COMBUSTIBLE À POLYÉLECTROLYTE

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.09.2004 JP 2004256590**

(43) Date of publication of application:
**20.06.2007 Bulletin 2007/25**

(73) Proprietor: **TORAY INDUSTRIES, INC.**
**Tokyo 103-8666 (JP)**

(72) Inventors:
- **IZUHARA, Daisuke,**
**8-1-210, Idegakaido-cho**
**Kyoto-shi,**
**Kyoto 6060931 (JP)**
- **ADACHI, Shinya**
**Ritto-shi,**
**Shiga 5203015 (JP)**
- **NAKAMURA, Masataka**
**Otsu-shi,**
**Shiga 5200846 (JP)**

(74) Representative: **Weber, Joachim**
**Hoefer & Partner**
**Patentanwälte**
**Pilgersheimer Strasse 20**
**81543 München (DE)**

(56) References cited:
**EP-A1- 1 612 232** **EP-A1- 1 619 735**
**WO-A1-2004/036679** **JP-A- 2003 217 342**
**JP-A- 2003 217 343** **JP-A- 2003 217 365**
**JP-A- 2005 019 055** **JP-A- 2005 174 897**
**US-A1- 2004 039 148**

- **KARLSSON L E ET AL: "Polysulfone ionomers for proton-conducting fuel cell membranes: sulfoalkylated polysulfones", JOURNAL OF MEMBRANE SCIENCE, ELSEVIER SCIENTIFIC PUBL.COMPANY. AMSTERDAM, NL, vol. 230, no. 1-2, 15 February 2004 (2004-02-15), pages 61-70, XP004486494, ISSN: 0376-7388, DOI: DOI: 10.1016/J.MEMSCI.2003.10.033**
- **BHUVANESH GUPTA ET AL: "Proton Exchange Membranes by Radiation Grafting of Styrene onto FEP Films. IV. Evaluation of the States of Water", JOURNAL OF APPLIED POLYMER SCIENCE, JOHN WILEY AND SONS INC. NEW YORK, US, vol. 57, 1 January 1995 (1995-01-01), pages 855-862, XP007915805, ISSN: 0021-8995**
- **WANG F ET AL: "SODIUM SULFONATE-FUNCTIONALIZED POLY(ETHER ETHER KETONE)S", MACROMOLECULAR CHEMISTRY AND PHYSICS, WILEY-VCH VERLAG, WEINHEIM, DE, vol. 199, no. 7, 1 July 1998 (1998-07-01), pages 1421-1426, XP000777518, ISSN: 1022-1352**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

• KREUER K D: "ON THE DEVELOPMENT OF PROTON CONDUCTING POLYMER MEMBRANES FOR HYDROGEN AND METHANOL FUEL CELLS", JOURNAL OF MEMBRANE SCIENCE, ELSEVIER SCIENTIFIC PUBL.COMPANY. AMSTERDAM, NL, vol. 185, 1 January 2001 (2001-01-01), pages 29-39, XP001181507, ISSN: 0376-7388, DOI: DOI: 10.1016/S0376-7388(00)00632-3

**Description**

TECHNICAL FIELD

The present invention relates to polymer electrolyte materials, polymer electrolyte parts, MEAs (membrane electrode assemblies), and polymer electrolyte fuel cells having excellent proton conductivity, and excellent fuel barrier property and mechanical strength.

BACKGROUND ART

Polymer electrolyte materials are used in various applications including medical material application, filtering application, concentrating application, ion exchange resin application, various structural material application, coating material application, and electrochemical application.

As the electrochemical application, a polymer electrolyte material is used as a polymer electrolyte part or a membrane electrode assembly in a fuel cell, redox flow cell, water electrolysis device, chloro alkaline electrolysis device and the like.

Among these, a fuel cell is a generator which generates little exhausts, and realizes high energy efficiency and exerts little load on environment. Therefore, this technique attracts the attention accompanying the recent increased interest in global environmental protection. A fuel cell is a power generator that has a great future as a power generator for use in distributed power generation facilities of relatively small-scale, or in mobile objects such as automobile and marine vessel. Also use in small mobile devices such as portable phone or personal computer, as an alternative for cell such as nickel hydrogen cell or lithium ion cell is expected.

In a polymer electrolyte fuel cell (hereinafter also referred to as "PEFC"), besides the conventional type using hydrogen gas as a fuel, a direct fuel cell in which a fuel such as methanol is directly supplied, attracts the attention. The direct fuel cell is advantageous in that power generating time per one charging is extended due to higher energy density because it uses liquid fuel and lacks a processor, although the output is lower than a conventional PEFC.

In a polymer electrolyte material for direct fuel cell, in addition to the performance required for a polymer electrolyte material for the conventional PEFC using hydrogen gas as a fuel, suppression of permeation of fuel is required. In particular, permeation of fuel in a polymer electrolyte membrane using a polymer electrolyte material causes the problem of decreases in cell output and energy capacity which are called fuel crossover, and chemical short.

In a direct fuel cell, different performance from that of a conventional PEFC using hydrogen gas as a fuel is required. Specifically, in an anode electrode of a direct fuel cell, a fuel such as methanol aqueous solution reacts in a catalyst layer of the anode electrode to generate proton, electron, and carbon dioxide, and the electron conducts to an electrode substrate, proton conducts to polymer electrolyte, and carbon dioxide passes through the electrode substrate and then discharged out of the system. Therefore, in addition to the characteristic required for an anode electrode of a conventional PEFC, permeation of fuel such as methanol aqueous solution and dischargeability of carbon dioxide are required. Further, in a cathode electrode of direct fuel cell, in addition to the reactions similar to that occurring in a conventional PEFC, the fuel such as methanol having passed through an electrolyte membrane and an oxidation gas such as oxygen or air react each other in a catalyst layer of the cathode electrode to generate carbon dioxide and water. Therefore, quantity of generating water is more than that in the case of a conventional PEFC, and it is necessary to discharge the water more efficiently.

Conventionally, as a polymer electrolyte membrane, perfluorinated proton conducting polymer membranes represented by Nafion (registered trademark) (Du Pont) have been used. However, such perfluorinated proton conducting polymer membranes show a large amount of permeation of a fuel such as methanol in a direct fuel cell, and has a problem that cell output and energy capacity are insufficient. Further, such perfluorinated proton conducting polymer membranes are very expensive because fluorine is used.

Under these circumstances, various approaches have already been made about a polymer electrolyte membrane based on non-fluorine polymer in response to the market demand for polymer electrolyte of non-fluorine proton conductor.

For example, in 1950s, styrenic cation exchange resins were studied. However, satisfactory cell life was not realized because such a resin failed to give sufficient strength to membrane which is a typical use form in a fuel cell.

A fuel cell which uses sulfonated poly (arylene ether ether ketone) as an electrolyte is also studied. For example, it is reported that when poly (arylene ether ether ketone) (Victrex (registered trademark) PEEK (registered trademark) (available from Victrex Plc) and the like can be exemplified) which is hard to dissolve in organic solvent is highly sulfonated, it becomes dissoluble to organic solvent, and easy to be formed into a membrane (see Non-patent document 1). However, such a sulfonated poly (ether ether ketone) acquires increased hydrophilicity at the same time, so that it may become water soluble or cause decrease in strength at the time of water absorption. A polymer electrolyte fuel cell typically produces water as byproduct by reaction between fuel and oxygen, and it is often the case that fuel itself contains water

in DFC. Therefore, when such a sulfonated poly (ether ether ketone) becomes water soluble, in particular, it is unsuited for direct use in an electrolyte for a fuel cell.

Further, polysulfone (e.g., UDELP-1700 (available from Amoco)) which is poly(arylene ether sulfone) or sulfonated polyether sulfone (e.g., Sumikaexcel PES (available from Sumitomo Chemical CO., Ltd.)) are also disclosed (see Non-patent document 2). The disclosure tells that sulfonated polysulfone becomes completely water soluble, so that it can not be discussed as an electrolyte. Although sulfonated polyethersulfone does not become water soluble, high suppressive effect of fuel crossover is not expected due to high absorption.

Also, sulfonated polyphosphazene is described as a polymer proton conductor based on a phosphorous polymer (see Non-patent document 3). However, sulfonated polyphosphazene has a highly hydrophilic main chain, so that high suppressive effect of fuel crossover is not expected due to high moisture content.

Other various polymer electrolyte membranes in which an anionic group is introduced into a nonfluorine aromatic polymer are proposed (see Patent document 1, 2, and Non-patent document 1).

However, these conventional polymer electrolyte membranes have the drawback that fuel crossover of methanol is large when an introducing amount of ionic group is increased for obtaining high conductivity, and water is more likely to be incorporated inside. In this polymer electrolyte membrane, there is abundant lower melting point water in the membrane, and fraction of non-freezing water is small, so that a fuel such as methanol is easy to permeate the lower melting point water, which may result in large fuel crossover.

Also disclosed is a polymer electrolyte material made of sulfonated polyether copolymer containing a fluorene component (see Patent document 3).

Also proposed is a polymer electrolyte material made of sulfonated polyether copolymer containing both of a fluorene component and a phenylene component (see Examples 19 and 24 in Patent document 4). However, fraction of the non-freezing water is not sufficiently high in these polymer electrolyte materials, so that when they are used with a liquid fuel of high temperature and high concentration, suppression of fuel crossover is insufficient.

Also proposed is a composite membrane of proton conducting polymer and other polymer. For example, a composite membrane formed of sulfonated poly(phenylene oxide) and poly(vinylidene fluoride) (Patent document 5) is known. Also known is a composite membrane formed of sulfonated polystyrene and poly (vinylidene fluoride) (Patent document 6). However, polymer electrolyte membranes described in these documents are membranes formed of a blended polymer of ion conducting polymer and poly (vinylidene fluoride), so that compatibility between polymers is poor, and a large phase-separated structure in the order of micrometers is likely to be formed, and it was difficult to realize both high conductivity and fuel crossover. In these polymer electrolyte membranes, there is lower melting point water or bulk water between phases, and fraction of non-freezing water in the electrolyte membrane is small. This may make suppression of fuel crossover difficult.

Also disclosed is a polymer electrolyte material in which block copolymer having a sulfonic acid group and aromatic polyimide are blended (Patent document 7). However, according to description of the document, these blend electrolyte materials are translucent or white or pale yellow opaque, and description about fuel crossover or the like is not found. From our experience, sufficient fuel crossover suppressing effect is not expected by a blend electrolyte material having such a phase-separated structure and large haze.

Also known is a membrane formed of a composite of proton conductivity polymer and copolymer of siloxane having a nitrogen atom-containing group and a metal oxide (Patent document 8). Also known is a membrane formed of a composite of Nafion (registered trademark) (available from Du Pont) and siloxane (Non-patent document 5, 6). However, since membranes described in these documents use "Nafion (registered trademark) " which is perfluorinated proton conducting polymer membrane, it was difficult to achieve both high proton conductivity and low fuel crossover even in a composite membrane with other polymer.

Also known is an ion exchange material obtained by immersing a porous base material in a composition containing a monomer having unsaturated bond and a monomer capable of introducing a cross-linked structure, followed by polymerization and sulfonation (see Patent document 9). However, when this membrane is used in application of direct methanol type fuel cell (hereinafter, also referred to as "DMFC"), the proton conductivity is insufficient despite long sulfonation time, and it is difficult to achieve proton conductivity of such a level that is acceptable in practical use of DMFC.

These conventional arts face the problems of high price of obtainable electrolyte, insufficient strength due to short of water resistance, or large fuel crossover which impairs oxidation resistance and radical resistance. Patent document 10 provides sulfonated random copolymer compositions which can be used to fabricate polymer electrolyte membranes maintaining dimensional stability in DMFC applications.

Patent document 1: U.S. Published Application No. 2002/91225, specification
Patent document 2: U.S. Patent No. 5403675, specification
Patent document 3: Japanese unexamined patent publication JP-A 2002-226575
Patent document 4: Published Japanese translation of PCT application JP-A 2002-524631
Patent document 5: U.S. Patent No. 6103414, specification.
Patent document 6: Published Japanese translation of PCT application JP-A 2001-504636

Patent document 7: Japanese unexamined patent publication JP-A 2002-260687
Patent document 8: Japanese unexamined patent publication JP-A 2002-110200
Patent document 9: Japanese unexamined patent publication JP-A 2003-12835 Patent document 10 : U.S. 2004/0039148
Non-patent document 1: "Polymer", 1987, vol.28, 1009.
Non-patent document 2: "Journal of membrane Science", 1993, Vol.83, 211-220.
Non-patent document 3: "Journal of Applied Polymer Science", 1999, Vol.71, 387-399.
Non-patent document 4: "Journal of membrane Science", 2002, Vol.197, 231-242
Non-patent document 5: "Polymers", 2002, Vol.43, 2311-2320
Non-patent document 6: "Journal of material Chemistry", 2002, Vol.12, 834-837

DISCLOSURE OF THE INVENTION

Problems to be solved by the invention

In consideration of the background of the conventional arts, it is an object of the present invention to provide a polymer electrolyte material realizing excellent proton conductivity even when it comes into direct contact with liquid fuel of high temperature and high concentration, and excellent fuel barrier property and mechanical strength, and thus to provide a polymer electrolyte fuel cell of high efficiency.

Means for solving the problem

In order to solve such a problem, the present invention adopts the following measures. More specifically, a polymer electrolyte material of the present invention is characterized in that fraction Rw of non-freezing water shown by the equation (S1) below is 75 to 100% by weight, and an ionic group is included, in a moisture state taken out after 12-hour immersion in 1 to 30% by weight methanol aqueous solution at 40 to 80°C and then 24-hour immersion in pure water at 20°C .

$$Rw=[Wnf/(Wfc+Wnf)]\times 100 \quad \ldots\ldots (S1)$$

(wherein, Wnf represents an amount of non-freezing water per 1 g of dry weight of polymer electrolyte material
Wfcrepresents an amount of lower-melting point water per 1 g of dry weight of polymer electrolyte material), wherein, the polymer electrolyte material comprises a hydrocarbon polymer having an ionic group,
wherein, the hydrocarbon polymer having an ionic group comprises a structure shown by Formula (P1):

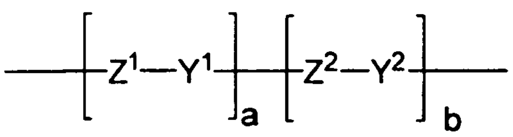
(P1)

(wherein $Z^1$ and $Z^2$ represent an organic group-containing an aromatic ring, each of which may represent two or more kinds of groups by one symbol; $Y^1$ represents CO, $Y^2$ represents O or S, each of a and b independently represents an integer of 0 to 2, provided that a and b do not 0 at the same time), wherein the ionic group is a sulfonic acid group, and wherein the density of sulfonic acid group is 0. 3 to 1.18 mmol/g.
A polymer electrolyte part of the present invention is characterized by being made from such a polymer electrolyte material, a membrane electrode assembly of the present invention is characterized by being made from such a polymer electrolyte part, and a polymer electrolyte fuel cell of the present invention is characterized by being made from such a membrane electrode assembly.

Effect of the Invention

According to the present invention, it is possible to provide a polymer electrolyte material realizing excellent proton conductivity even when it comes into direct contact with liquid fuel of high temperature and high concentration, and excellent fuel barrier property and mechanical strength, and thus to provide a polymer electrolyte fuel cell of high efficiency.

BEST MODE FOR CARRYING OUT THE INVENTION

In the present invention, the inventors made diligent efforts for achieving the above object, namely, about a polymer electrolyte material realizing excellent proton conductivity even when it comes into direct contact with liquid fuel at high temperature and high concentration, and excellent fuel barrier property and mechanical strength, and found that high proton conductivity and performance of suppressing fuel crossover of the polymer electrolyte material significantly depend on the existing condition and amount of water contained in the polymer electrolyte material. The inventors found that existing the condition and amount of water contained in a polymer electrolyte material after preprocessing in a certain condition is particularly important when the polymer electrolyte material comes into contact with liquid fuel of high temperature and high concentration, and accomplished the present invention.

To be more specific, the inventors demonstrated that the above object is cleared up at a stretch by a polymer electrolyte material in which fraction Rw of non-freezing water shown by the equation (S1) below is 75 to 100% by weight, and an ionic group is included, in a moisture state taken out after 12-hour immersion in 1 to 30% by weight methanol aqueous solution at 40 to 80°C and then 24-hour immersion in pure water at 20°C.

$$Rw=[Wnf/(Wfc+Wnf)]\times 100 \quad ......(S1)$$

(wherein, Wnfrepresents an amount of non-freezing water per 1 g of dry weight of polymer electrolyte material

Wfcrepresents an amount of lower-melting point water per 1 g of dry weight of polymer electrolyte material), wherein, the polymer electrolyte material comprises a hydrocarbon polymer having an ionic group, wherein, the hydrocarbon polymer having an ionic group comprises a structure shown by Formula (P1):

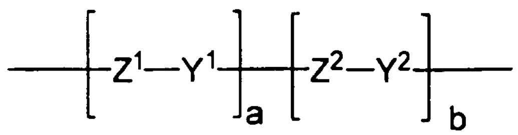

(P1)

(wherein $Z^1$ and $Z^2$ represent an organic group-containing an aromatic ring, each of which may represent two or more kinds of groups by one symbol; $Y^1$ represents CO, $Y^2$ represents O or S, each of a and b independently represents an integer of 0 to 2, provided that a and b do not 0 at the same time), wherein the ionic group is a sulfonic acid group, and wherein the density of sulfonic acid group is 0.3 to 1.18 mmol/g.

In the present invention, water existing in a polymer electrolyte material is classified by the following definitions:

bulk water: water whose melting point is measured at 0°C or higher;
lower melting point water: water whose melting point is measured at less than 0°C and -30°C or higher; and
non-freezing water: water whose melting point is not measure at -30°C or higher, and the inventors demonstrated that by controlling proportions of these, particularly proportion of non-freezing water, performance of the polymer electrolyte material can be significantly improved.

As for this measurement method, description is found in document of "Journal of Colloid and Interface Science, Vol. 171, 92-102 (1995)". The value is determined by differential scanning calorimetry (DSC).

A polymer electrolyte material in its moisture state, contains bulk water, lower melting point water and non-freezing water. It is believed that a fuel such as methanol mainly permeates the lower melting point water, and when its proportion is large, the fuel crossover increases. On the other hand, it is considered that non-freezing water is present in the vicinity of an ionic group and a polar group in the polymer electrolyte material and the fuel such as methanol does not easily permeate the non-freezing water. Therefore, by realizing a polymer electrolyte material having large content of such non-freezing water, it is possible to achieve both high proton conductivity and fuel crossover, and it is possible to achieve high output and high energy capacity in a polymer electrolyte fuel cell. Even in the case where such a condition is satisfied, there is a problem that fuel crossover increases because proportion and amount of lower melting point water increase as the polymer electrolyte material comes into contact with fuel of high temperature and high concentration. However, such a problem is successfully solved by application of a specific polymer electrolyte material of the present invention.

In the above equation (S1), when fraction of the non-freezing water (hereinafter, simply referred to as "Rw") is too small, fuel crossover suppressing effect is insufficient. From these view points, Rw is preferably as close as possible to 100% by weight, however when no lower melting point water is contained, there is a fear of decrease in proton

conductivity. Therefore, upper limit of Rw is preferably about 99. 9% by weight, and from these view points, Rw in the present invention is preferably 75 to 99.9% by weight, more preferably 80 to 99.9% by weight, particularly preferably 90 to 99.9% by weight, and most preferably 95 to 99.9% by weight.

Since the polymer electrolyte material of the present invention shows sufficiently larger Rw even after immersion in 1 to 30% by weight methanol aqueous solution at 40 to 80°C, high proton conductivity and high fuel crossover suppressing effect are obtained even when the polymer electrolyte material is used in application where it comes into direct contact with fuel of high temperature and high concentration, for example, in a direct fuel type fuel cell. Here, concentration of methanol aqueous solution is necessarily 1% by weight or higher, preferably 10% by weight or higher, more preferably 20% by weight or higher, more preferably 25% by weight or higher, and most preferably 30% by weight. When concentration of methanol aqueous solution is too low, the effect of the present invention is not sufficiently obtained.

The temperature at which the polymer electrolyte material of the present invention is immersed in 1 to 30% by weight methanol aqueous solution is 90 to 80°C, more preferably 50 to 75°C, 55 to 65°C, and most preferably 60°C.

More preferably, the polymer electrolyte material of the present invention shows Rw of 75 to 100% by weight, and includes an ionic group, in a moisture state taken out after 12-hour immersion in 30% by weight methanol aqueous solution at 60°C and then 24-hour immersion in pure water at 20°C.

In the polymer electrolyte material of the present invention, a non-freezing water amount per 1 g of dry weight of polymer electrolyte material (hereinafter, also referred to as simply Wnf) is preferably 0.05 to 2 "in a moisture state taken out after12-hour immersion in 1 to 30% by weight methanol aqueous solution at 40 to 80°C and then 24-hour immersion in pure water at 20°C", and more preferably "in a moisture state taken out after 12-hour immersion in 30% by weight methanol aqueous solution at 60°C and then 24-hour immersion in pure water at 20°C ".

When the Wnf is less than 0.05, proton conductivity may not be ensured, and when the Wnf is more than 2, actual effect of suppression of fuel crossover may not be expected. From this point, Wnf is more preferably 0.065 to 1, and particularly preferably 0.08 to 0.8.

Wnf (non-freezing water amount) and Wfc (low melting point water amount) and Wf (bulk water amount) in the equation (S1) below are determined by differential scanning calorimetry (DSC).

In the following, additional explanation will be given about methods of measuring Wnf, Wfc and Wf "in a moisture state taken out after 12-hour immersion in 30% by weight methanol aqueous solution at 60°C and then 24-hour immersion in pure water at 20°C".

Concretely, a sample is immersed in 30% by weight methanol aqueous solution (1000 times or more of sample amount by weight ratio) at 60°C under stirring for 12 hours, then immersed in pure water at 20°C (1000 times or more of sample amount by weight ratio) under stirring for 24 hours, and then taken out, and excess surface adhered water was quickly wiped and removed with gauze, and then input into a sealed-type aluminum sample vessel having aluminum coating whose weight (Gp) is measured in advance. After crimping the vessel, a total weight (Gw) of the sample and the sealed-type sample vessel was measured as quick as possible, and DSC measurement was immediately carried out. Measurement temperature program includes cooling from room temperature to -30°C at a speed of 10°C/min, raising temperature to 5°C at a speed of 0.3°C/min, and determing bulk water amount (Wf) according to the following equation (n1) from a DSC curve in this temperature raising course, and then determining low melting point water amount (Wfc) according to the equation (n2) below, and then subtracting these values from the total moisture content (Wt), and thus determining non-freezing water amount (Wnf) (the equation (n3) below).

[equation 1]

$$W_f = \int_{T_0}^{>T_0} \frac{\frac{dq}{dt}}{m\Delta H_0} dt \qquad (n1)$$

$$W_{fc} = \int_{<T_0}^{T_0} \frac{\frac{dq}{dt}}{m\Delta H(T)} dt \qquad (n2)$$

$$W_{nf} = W_t - W_f - W_{fC} \qquad (n3)$$

Here, bulk water amount (Wf), low melting point water amount (Wfc), non-freezing water amount (Wnf), and total moisture content (Wt) are represented by weight per unit weight of dry sample. "m" represents dry sample weight, "dq/dt" represents heat flux signal of DSC, "$T_0$" represents melting point of bulk water, and "$\Delta H_0$" represents fusion enthalpy at melting point ($T_0$) of bulk water.

Preferably, the polymer electrolyte material of the present invention has the form of membrane. This is because when used for fuel cell, it is used as a polymer electrolyte membrane or as an electrocatalyst layer typically in the form of membrane.

When the polymer electrolyte material of the present invention is in the form of membrane, methanol permeation amount per unit area with respect to 30% by weight methanol aqueous solution in the condition of 20°C is preferably 40 $\mu mol \cdot min^{-1} \cdot cm^{-2}$ or less. This is because in a fuel cell using a membrane of polymer electrolyte material, small fuel permeation amount is required to keep high fuel concentration from the view point that high output and high energy capacity are obtained in a high fuel concentration region.

From this view point, the methanol permeation amount is most preferably 0 $\mu mol \cdot min^{-1} \cdot cm^{2}$, however from the view point of ensuring proton conductivity, the methanol permeation amount is preferably 0.01 $\mu mol \cdot min^{-1} \cdot cm^{2}$ or more.

In addition, when the polymer electrolyte material of the present invention is in the form of membrane, proton conductivity per unit area is preferably 3S · $cm^{-2}$ or more. Such proton conductivity can be measured by constant potential AC impedance method which is carried out as rapid as possible after immersing a membrane-like sample in pure water at 25°C for 24 hours and taken it out into atmosphere at 25°C and relative humidity of 50 to 80%.

By making the proton conductivity per unit area 3 $S \cdot cm^{-2}$ or more, sufficient proton conductivity, namely sufficient cell output can be obtained when it is used as a polymer electrolyte membrane for fuel cell. Higher proton conductivity is more preferred, however, if it is too high, a membrane of high proton conductivity is more likely to dissolve and disintegrate in methanol water and the like fuel and a fuel permeation amount tends to increase. Therefore, it is preferred that the upper limit is 50 $S.cm^{-2}$.

A methanol Permeation amount per unit area · unit thickness of the polymer electrolyte material in the present invention under the above condition is preferably 1000 nmol · $min^{-1}$ · $cm^{-1}$ or less, more preferably 500 nmol · $min^{-1}$ · $cm^{-1}$ or less, and further preferably 250 nmol · $min^{-1}$ · $cm^{-1}$ or less. Permeation amount of 1000 nmol · $min^{-1}$ · $cm^{-1}$ or less allows prevention of decrease in energy capacity in the case of use in a direct fuel cell (DFC). On the other hand, 1 nmol · $min^{-1}$ · $cm^{-1}$ or more is preferred from the view point of ensuring proton conductivity.

Additionally, proton conductivity per unit area/unit thickness measured in the above condition is preferably 1 $mS \cdot cm^{-1}$ or more, more preferably 5 $mS \cdot cm^{-1}$ or more, and further preferably 10 $mS \cdot cm^{-1}$ or more. By selecting 1 $mS \cdot cm^{-1}$ or more, high output of cell is obtained. On the other hand, a membrane of high proton conductivity is more likely to dissolve or disintegrate by fuel such as methanol water, and tends to increase a fuel permeation amount, so that practical upper limit is 5000 mS · $cm^{-1}$.

Preferably, the polymer electrolyte material of the present invention simultaneously achieve both a low methanol permeation amount and high proton conductivity. Achievement of either one of these is easy by a conventional art, however, achievement of both high output and high energy capacity is realized only when both a low methanol permeation amount and high proton conductivity are achieved.

It is necessary that the polymer electrolyte material of the present invention includes an ionic group. By having an ionic group, the polymer electrolyte material has high proton conductivity.

The ionic group used herein is an atom group having negative charge, and has a proton exchange ability. As such a functional group, a sulfonic acid group is used. Here, a sulfonic acid group means a group shown by Formula (f1) below, Sulfonimide group means a group shown by Formula (f2) below [wherein R represents an arbitrary atom group], a sulfuric acid group means a group shown by Formula (f3) below, a phosphonic acid group means a group shown by Formula (f4) below, a phosphoric acid group means a group shown by Formulae (f5) or (f6) below, and a carboxylic acid group means a group shown by Formula (f7) below. Groups of Formulae (f2) - (f7) do not fall under the scope of the present invention in regard to the ionic group.

[Chemical formula 1]

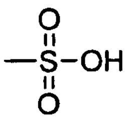
(f1)

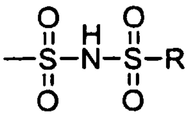
(f2)

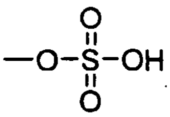
(f3)

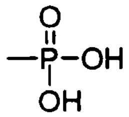
(f4)

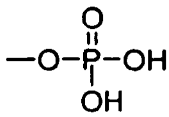
(f5)

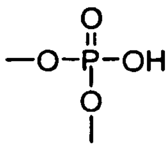
(f6)

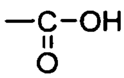
(f7)

The ionic sulfonic group also includes said cases where the functional group (f1) is in the form of salt. Examples of cation that forms the above salt include arbitrary metal cations, $NR_4^+$ (R is an arbitrary organic group) and the like. As for metal cations, there is no limitation about valency. Concrete examples of preferred metal ions include Li, Na, K, Rh, Mg, Ca, Sr, Ti, Al, Fe, Pt, Rh, Ru, Ir, Pd and the like. Among these, Na, K, Li which are inexpensive and easily substituted by proton are more preferably used as polymer electrolyte materials.

Two or more kinds of ionic groups of Formulae (f1) - (f7) may be included in the polymer electrolyte material, and they may be preferred by certain combination provided that at least one ionic group is a sulfonic acid group. Combination is appropriately determined depending on the structure of polymer and the like.
To have at least a sulfonic acid group has advantages from the view point of high proton conductivity and hydrolysis resistance.

In the polymer electrolyte material of the present invention having a sulfonic acid group, the sulfonic acid group density is 0. 3 to 1.18 mmol/g , and preferably 0.8 to 1.18 mmol/g from the view point of proton conductivity and fuel crossover suppression. By selecting the density sulfonic acid group of 0.3 mmol/g or more, it is possible to maintain the conductivity or output performance, and by selecting the density of 1.18 mmol/g or less, it is possible to realize sufficient fuel barrier property and mechanical strength in moisture state, in the case of use as an electrolyte membrane for fuel cell.

Here, the term "sulfonic acid group density" means molar quantity of sulfonic acid group introduced per unit dry weight of polymer electrolyte material. The larger the value thereof, the higher the degree of sulfonation is. The sulfonic acid group density may be measured by neutralization titration. The polymer electrolyte material of the present invention also involves an aspect of composite which comprises polymer having an ionic group and other component as will be described later, and in such a case, a sulfonic acid group density is determined based on entire quantity of the composite.

The polymer electrolyte material of the present invention is a polymer electrolyte material containing a hydrocarbon polymer having an ionic group (hereinafter, also referred to as Embodiment 1).

A preferred embodiment of the polymer electrolyte material of the present invention is a polymer electrolyte material containing a hydrocarbon polymer having an ionic group and a heterocyclic polymer (hereinafter, also referred

to as Embodiment 2).

Other one preferred embodiment of the polymer electrolyte material of the present invention is a polymer electrolyte material containing a hydrocarbon polymer having an ionic group and a vinyl polymeric polymer (hereinafter, also referred to as Embodiment 3).

Still another one polymer electrolyte material of the present invention is a polymer electrolyte material which is cross-linked by a hydrocarbon polymer having an ionic group and a cross-linking compound having a group shown by Formula (M1) below (hereinafter, also referred to as Embodiment 4).

$$-CH_2OU^1 \qquad (M1)$$

(wherein, $U^1$ is a hydrogen or an arbitrary organic group)

The term "hydrocarbon polymer having an ionic group" used herein means a polymer having an ionic group other than perfluorinated polymer. Here, the term "perfluorinated polymer" means a polymer in which most part or all of hydrogens in an alkyl group and/or an alkylene group are substituted with fluorine atoms. In this context, a polymer in which 85% or more of hydrogen in an alkyl group and/or an alkylene group of the polymer is substituted with fluorine atoms is defined as a perfluorinated polymer. Representative examples of the perfluorinated polymer having an ionic group of the present invention include Nafion (registered trademark)(available from Du Pont), Flemion (registered trademark) (available from ASAHI GLASS CO., LTD.), Aciplex (registered trademark)(available from Asahi Kasei Corporation.) and the like commercially available products. Structure of these perfluorinated polymers having an ionic group can be represented by Formula (N1) below.

[Chemical formula 2]

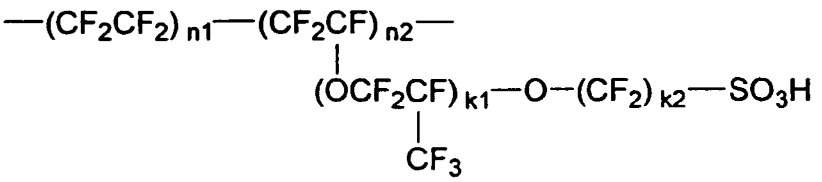

(N1)

[In the Formula (N1), each of $n_1$ and $n_2$ independently represent a natural number. Each of $k_1$ and $k_2$ independently represent an integer from 0 to 5]

Since these perfluorinated polymers having an ionic group form a phase structure in which hydrophobic part and hydrophilic part in the polymer are clear, water channel which is called "cluster" is formed in the polymer in moisture state. In this water channel, fuel such as methanol is movable, so that reduction in fuel crossover is not expected.

On the other hand, Embodiments 1 to 4 of polymer electrolyte material of the present invention include a hydrocarbon polymer having an ionic group, so that both high proton conductivity and fuel crossover are achieved. In a polymer electrolyte material of the present invention, the reason why crossover of fuel such as methanol is reduced is not clear in the current stage, however, it is supposed as follows. It can be supposed that since a molecule chain of polymer having an ionic group which usually easily gets swollen by an aqueous solution of fuel such as methanol is mingled or bonded in molecular level, to a heterocyclic polymer, vinyl polymerization polymer, or cross-linking compound having a group shown Formula (M1) below which is too rigid to get swollen by an aqueous solution of fuel such as methanol, the polymer having an ionic group is constrained in molecular level, and swelling of polymer electrolyte material by an aqueous solution of fuel such as methanol is suppressed, and fuel crossover is reduced, and reduction in strength of membrane is also suppressed.

$$-CH_2OU^1 \qquad (M1)$$

(wherein $U^1$ represents a hydrogen or an arbitrary organic group.)

That is, when a conventional polymer having an ionic group is used as the polymer electrolyte material, increased the content of ionic groups for improving the proton conductivity will cause swelling of the polymer electrolyte material, and facilitate formation of large cluster inside, which leads increase in so-called free water in the polymer electrolyte material. In such free water, fuel such as methanol easily moves, and fuel crossover of such as methanol is difficult to be suppressed.

In the polymer electrolyte material of the present invention, the haze in moisture state is preferably controlled to 30% or less, and from the view point of proton conductivity and suppressive effect of fuel crossover, the haze in moisture state is preferably controlled to 20% or less. When such a haze in moisture state is more than 30%, the

hydrocarbon polymer having an ionic group and the second component can not uniformly mix, so that phase separation occurs, and sufficient proton conductivity, fuel crossover suppressive effect, and solvent resistance can not be obtained because of influence between these phases or reflection of the nature of original polymer having an ionic group. Also, there is a case that sufficient proton conductivity is not obtained. From the viewpoint of positioning of an anode electrode and a cathode electrode, relative to the polymer electrolyte membrane in preparation of a membrane electrode assembly, a polymer electrolyte membrane having a haze in moisture state of 30% or less is preferably used.

The term "haze in moisture state" used herein is a value measured in the manner as described below. A polymer electrolyte membrane is used as a sample, and the sample is immersed in 30% by weight methanol aqueous solution (1000 times or more of sample amount by weight ratio) at 60°C under stirring for 12 hours, then immersed in pure water at 20°C (1000 times or more of sample amount by weight ratio) under stirring for 24 hours, and then taken out, and water drops on surface were quickly wiped and removed. Then the sample was subjected to measurement by a full automatic direct reading haze computer (manufactured by SUGA TEST INSTRUMENTS Co., Ltd.: HGM-2DP) to determine a value of haze. Membrane thickness may be arbitrarily selected within the range of 10 to 500 $\mu$m.

In the preferred embodiments 1 to 4 of the polymer electrolyte material of the present invention, from the view points of production cost and fuel crossover suppressive effect, it is more preferred that they have superior solvent resistance, in other words, they show weight reduction of 30% by weight or less after 5 hour-immersion in N-methylpyrrolidone at 50°C. More preferably, the weight reduction is 20% by weight or less. When the weight reduction is more than 30%, the fuel crossover suppressive effect may be insufficient, or it becomes difficult to produce a membrane electrode assembly by direct application of the catalyst paste on the polymer electrolyte membrane. This leads not only cost increase, but also increase in interface resistance with the catalyst layer, so that sufficient power generating characteristic may not be obtained.

Weight reduction for N-methylpyrrolidone of polymer electrolyte material is measured in the following manner.

In brief, after washing a polymer electrolyte material (about 0.1 g) which is to be a specimen with pure water, the material is dried in vacuum at 40°C for 24 hours, and then the weight is measured. The polymer electrolyte material is immersed in 1000 times by weight of N-methylpyrrolidone, and heated at 50°C for 5 hours under stirring in a sealed vessel. Then it is filtered through filter paper (No. 2) available from Adantech Co., Ltd. In filtration, the filter paper and the residue were washed with 1000 times weight of the same solvent to allow the elutes to thoroughly elute in the solvent. From the weight of the residue measured after drying in vacuum at 40°C for 24 hours, weight reduction is calculated.

Typically a hydrocarbon polymer having an ionic group is difficult to be used for melting membrane formation due to the low heat resistance of the ionic group. Therefore, from the view point of production cost and easiness of forming process of membrane, membrane formation is preferably carried out by solution membrane formation, and having solubility to solvent is preferred.

On the other hand, as a method of providing a polymer electrolyte membrane with a catalyst layer, a method of directly applying a catalyst paste to the polymer electrolyte membrane is generally considered as being preferred from the view point of reduction in interface resistance. However, at that time, a polymer electrolyte membrane of poor solvent resistance may cause dissolution of membrane, or occurrence of crack or deformation, and it is often the case that the essential membrane performance is not realized. Further, when the polymer electrolyte membrane is formed into a laminate membrane, the technique of directly applying the next polymer solution to the polymer electrolyte membrane is widely employed However, such a technique also brings the problem that the membrane dissolves or deforms and essential membrane performance is not realized.

To the contrary, Embodiments 1 to 4 of the polymer electrolyte material of the present invention are excellent in solvent resistance, and little dissolve in, for example, N-methylpyrrolidone, and hence they are expected to be polymer electrolyte materials capable of reducing interface resistance with a catalyst layer and significantly reducing production cost.

Next, explanation will be made on a hydrocarbon polymer having an ionic group used in Embodiments 1 to 4. In the present invention, the hydrocarbon polymer having an ionic group may concurrently use two or more kinds of polymers.

As the polymer having an ionic group used in the present invention, hydrocarbon polymer is more preferably used from the view point of fuel crossover suppressive effect and production cost. When a perfluorinated polymer such as Nafion (registered trademark) (available from Du Pont) is used, the high cost and formation of cluster structure limit the fuel crossover suppressive effect as described above, and hence it is very difficult to bring the polymer electrolyte fuel cell which requires high energy capacity into practical use.

Further, as the hydrocarbon polymer having an ionic group used in the present invention, a solvent-dissolvable non-cross-linked polymer is more preferably used from the view point of easiness of molding process and production cost.

Examples of the hydrocarbon polymer having an ionic group are shown in the following (E-1) and (E-2).

First, (E-1) is a polymer obtained from vinyl polymerizable monomer.

For example, polymers obtained from vinyl polymerizable monomer having an ionic group represented by acrylic acid, methacrylic acid, vinyl benzoic acid, vinyl sulfonic acid, allylsulfonic acid, polystyrenesulfonic acid, maleic

acid, 2-acrylamide-2-methylpropane sulfonic acid, sulfopropyl (meth) acrylate, ethylene glycol methacrylate phosphate and the like can be recited. A polymer obtained by copolymerizing such a vinyl polymerizable monomer having an ionic group and a monomer not having an ionic group may also be preferably used.

As such a monomer not having an ionic group, any compounds having a vinyl polymerizable functional group can be used without particular limitation. Preferred examples include (meth)acrylic acid ester compounds such as methyl (meth)acrylate, ethyl (meth)acrylate, propyl (meth)acrylate, butyl (meth)acrylate, 2-ethylhexyl (meth)acrylate, dodecyl (meth)acrylate, benzyl (meth)acrylate, 2-hydroxyethyl (meth)acrylate; styrenic compounds such as polystyrene, $\alpha$-methylstyren, aminostyrene and chloromethylstyrene; (meth)acrylamide compounds such as (meth)acrylonitrile, (meth)acrylamide, N,N-dimethylacrylamide, N-acryloylmorpholine, and N-methylacrylamide; maleimide compounds such as N-phenyl maleimide, N-benzyl maleimide, N-cyclohexylmaleimide and N-isopropyl maleimide.

A polymer in which an ionic group is introduced into a polymer obtained from a vinyl polymerizable monomer not having an ionic group is preferred. As a method of introducing an ionic group, a publicly known method may be employed. For example, first, introduction of a phosphonic acid group may be carried out in accordance with the method described, for example, in Polymer Preprints, Japan, 51, 750 (2002). Next, a phosphoric acid group may be introduced, for example, by phosphoric esterification of a polymer having a hydroxyl group. Introduction of a carboxylic acid group may be achieved, for example, by oxidation of a polymer having alkyl group or a hydroxy alkyl group. Introduction of a sulfuric acid group may be achieved, for example, by sulfuric esterification of a polymer having a hydroxyl group.

As a method of introducing a sulfonic acid group, for example, a method described in JP-A 2-16126 or in JP-A 2-208322 are known in the art. Concretely, for example, sulfonation may be achieved by reacting a polymer with a sulfonating agent such as chlorosulfonic acid in a halogenated hydrocarbon solvent such as chloroform, or in concentrated sulfuric acid or fuming sulfuric acid. For such a sulfonating agent, there is no limitation as far as it sulfonates a polymer, and sulfur trioxide besides the above may be used. For example, in the case of a polymer having an epoxy group, sulfonation may be achieved in accordance with the method described in J. Electrochem. Soc., Vol.143, No.9, 2795-2799 (1996).

The degree of sulfonation in the case of sulfonation of polymer according to these methods may be readily controlled by use amount of a sulfonating agent, reaction temperature, reaction time and the like. Introduction of a sulfonimide group into an aromatic polymer may be achieved, for example, by a reaction between a sulfonic acid group and a sulfonamide group.

When the polymer having an ionic group is a cross-linked polymer, the production cost tends to rise despite the advantage in suppression of fuel crossover. When a polymer obtained from a vinyl polymerizable monomer is cross-linked, copolymerization may be conducted using those having a plurality of polymerizable functional groups among vinyl polymerizable monomers as a cross-linking agent.

Examples of those having a plurality of polymerizable functional groups among vinyl polymerizable monomers include (meth)acrylic acid ester compounds such as ethyleneglycol di(meth)acrylate, diethyleneglycol di(meth)acrylate, triethyleneglycol di(meth)acrylate, polyethyleneglycol di(meth)acrylate, propyleneglycol di(meth)acrylate, dipropyleneglycol di(meth)acrylate, tripropyleneglycol di(meth)acrylate, polypropyleneglycol di(meth)acrylate, trimethyrolpropanetri (meth)acrylate, pentaerythritoltetra (meth)acrylate, and dipentaerythritolpoly (meth)acrylate; styrenic compounds such as divinylbenzene, divinylnaphthalene, and divinylbiphenyl; (meth)acrylamide compounds such as methylenebis (meth) acrylamide; and maleimide compounds such as phenylene bismaleimide, and p,p'-oxybis (phenyl-N-maleimide).

In producing a polymer obtained from such a vinyl polymerizable monomer, a thermopolymerization initiator represented by peroxides or azos, or a photopolymerization initiator is generally added to the monomer composition in order to facilitate the polymerization.

In conducting thermopolymerization, the one that has optimum decomposition characteristic at desired reaction temperature is selected and used. Generally, a peroxide initiator having 10-hour half-life temperature of 40 to 100°C is preferred, and with such an initiator, a polymer electrolyte material without cracking can be produced.

Examples of the photopolymerication initiator include combined agents of carbonyl compound such as benzophenone and amine, mercaptan compounds, and disulfide compounds.

Such a polymerization initiator is used singly or in combination, and used in an amount of up to about 1% by weight.

As a polymerization method, and molding method, publicly known methods may be used. For example, a polymerization method carried out between plate-like molds, or method of polymerizing a monomer composition made into a thin film by coating or the like, in inert gas or reduced-pressure atmosphere can be recited.

As one example, a polymerization method carried out between plate-like moldswill be explained below. First, a monomer composition is charged into a gap between two plate-like molds. Then the composition is molded into a membrane by photopolymerization or thermopolymerization. The plate molds are made of resin, glass, ceramics, metal and the like, and in the case of photopolymerization, an optically parent material is used and resin or glass is typically used. A gasket may also be used as necessary for the purpose of giving a certain thickness to the membrane and preventing liquid leaking of the charged monomer composition. The plate-like molds having the monomer composition

in the gap is irradiated with an active light beam such as ultraviolet ray, or polymerized by heating in an oven or liquid vessel. Also combination of photopolymerization and thermopolymerization is available such that photopolymerization is followed by thermopolymerization or thermopolymerization is followed by photopolymerization. In the case of photopolymerization, it is general that light containing abundant ultra violet rays from light source such as mercury lamp or light trap is applied for short time (typically one hour ore shorter). In the case of thermopolymerization, the condition of gradually raising temperature from around room temperature to the temperature of 60°C to 200°C over several hours to several tens hours is preferred for keeping the uniformity and quality and for improving the reproducibility.

Next, (E-2) is a polymer having an ionic group and having an aromatic ring in the main chain. In other words, it is a polymer having an aromatic ring in the main chain and having an ionic group.

The main chain structure is not particularly limited insofar as it has an aromatic ring, however, those having sufficient mechanical strength used , for example, as engineering plastic are preferred. For example, polyphenylene polymers as described in description of U.S. Patent No. 5,403,675, JP-A 2001-192531 and JP-A 2002-293889 are preferred.

Further, a polymer having at least in the main chain one or more polar group which is different from the ionic group is preferred. It can be supposed that by promoting coordination of water in the vicinity of the main chain so as to increase non-freezing water amount, high proton conductivity is realized and fuel crossover is reduced.

A polar group is not particularly limited, however it is preferably a functional group to which water can coordinate. As such a polar group, a sulfonyl group shown by Formula (g1) below, oxy group shown by Formula (g2) below, thio group shown by Formula (g3) below, a carbonyl group shown by Formula (g4), a phosphineoxide group shown by Formula (g5) (wherein $R^1$ represents a monovalent organic group), a phosphonic acid ester group shown by Formula (g6) (wherein $R^2$ represents a monovalent organic group), an ester group shown by Formula (g7), an amide group shown by Formula (g8) (wherein $R^3$ represents a monovalent organic group), an imide group shown by Formula (g9) and a pohsphazene group shown by Formula (g10) (wherein $R^4$ and $R^5$ represent a monovalent organic group) and the like are preferred.

[Chemical formula 3]

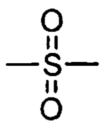
(g1)

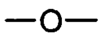
(g2)

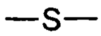
(g3)

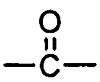
(g4)

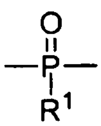
(g5)

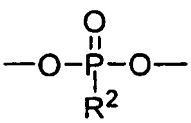
(g6)

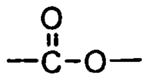
(g7)

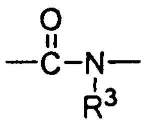
(g8)

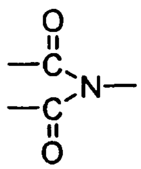
(g9)

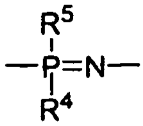
(a10)

Among these polymers having such a polar group, the inventive hydrocarbon polymer is selected from an aromatic hydrocarbon polymer having a repeating unit shown by the following Formula (P1)

[Chemical formula 4]

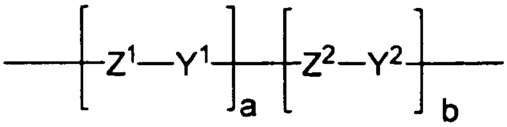

(P1)

(Wherein, $Z^1$ and $Z^2$ represent an organic group including an aromatic ring, each of which may represent two or more kinds of groups by one symbol. $Y^1$ represents an electrophilic group. $Y^2$ represents O or S. Each of a and b independently represents an integer of 0 to 2, provided that a and b do not 0 at the same time.). Further described is a polyimide having a repeating unit shown by the following Formula (P3)

[Chemical formula 5]

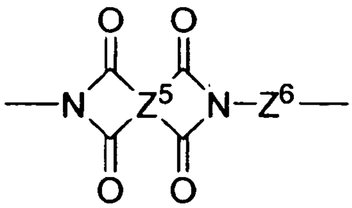

(P3)

(Wherein, $Z^5$ and $Z^6$ represent an organic group including an aromatic ring, each of which may represent two or more kinds of groups.).

An organic group which is preferred as $Z^5$ includes organic groups shown by Formula (Z5-1) to Formula (Z5-4) below, and an organic group shown by Formula (Z5-1) is most preferable from the viewpoint of hydrolysis resistance. These may be substituted.

[Chemical formula 6]

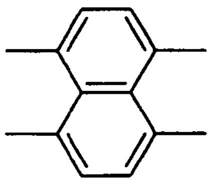

(Z5-1)

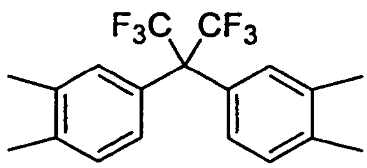

(Z5-3)

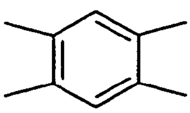

(Z5-2)

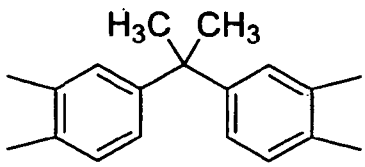

(Z5-4)

An organic group which is preferred as $Z^6$ includes organic groups shown by Formula (Z6-1) to Formula (Z6-10). These may be substituted.

[Chemical formula 7]

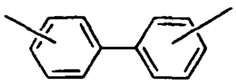

(Z6-1)

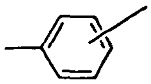

(Z6-2)

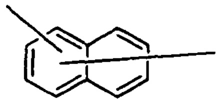

(Z6-3)

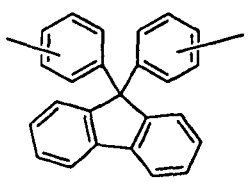

(Z6-4)

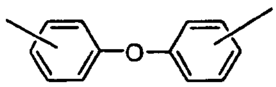

(Z6-5)

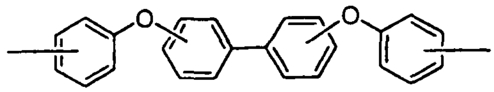

(Z6-6)

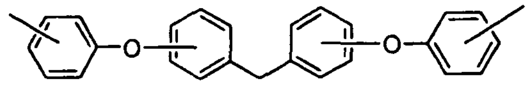

(Z6-7)

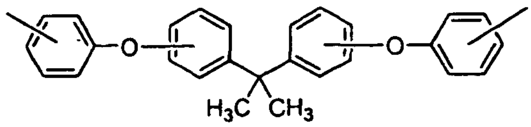

(Z6-8)

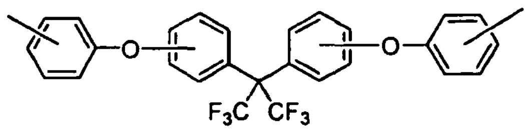

(Z6-9)

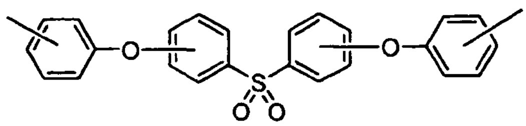

(Z6-10)

As the polymer electrolyte material, an aromatic hydrocarbon polymer having a repeating unit shown by Formula (P1) below is used because of excellent hydrolysis resistance. Among aromatic hydrocarbon polymers having a repeating unit shown by Formula (P1), aromatic hydrocarbon polymers having a repeating unit shown by Formula (P1-1) to Formula (P1-9) are particularly preferred. In view point of height of proton conductivity and easiness of production, aromatic hydrocarbon polymers having a repeating unit shown by Formula (P1-6) to Formula (P1-9) are most preferred.

[Chemical formula 8]

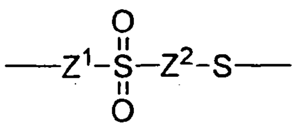

(P1-1)

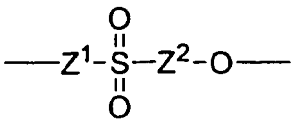

(P1-2)

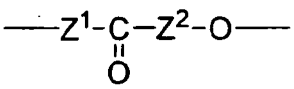

(P1-3)

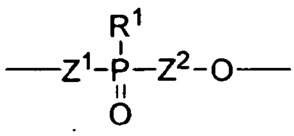

(P1-4)

$—Z^2–S—$ (P1-5)

$—Z^2–O—$ (P1-6)

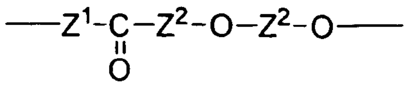

(P1-7)

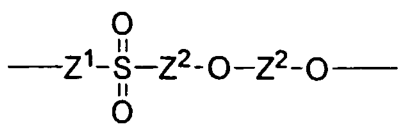

(P1-8)

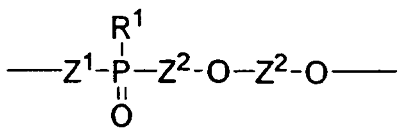

(P1-9)

An organic group which is preferred as $Z^1$ is a phenylene group and a naphthylene group. They may be substituted.

An organic group which is preferred as $Z^2$ is a phenylene group, a naphthylene group and organic groups shown by Formula (Z2-1) to Formula (Z2-14). They may be substituted. Among these, organic groups shown by Formula (Z2-7) to Formula (Z2-14) are particularly preferred because of excellent fuel permeation suppressive effect, and a polymer electrolyte of the present invention preferably contains as $Z^2$ at least one selected from the organic groups shown by Formula (Z2-7) to Formula (Z2-14). Among the organic groups shown by Formula (Z2-7) to Formula (Z2-14), organic groups shown by Formula (Z2-7) and (Z2-8) are more preferred, and an organic group shown by Formula (Z2-7) is most preferred.

[Chemical formula 9]

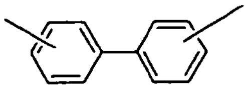

(Z2-1)

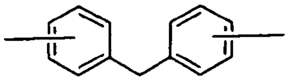

(Z2-2)

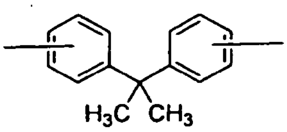

(Z2-3)

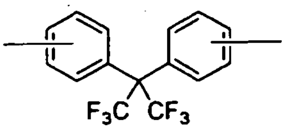

(Z2-4)

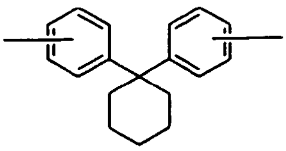

(Z2-5)

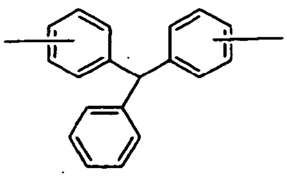

(Z2-6)

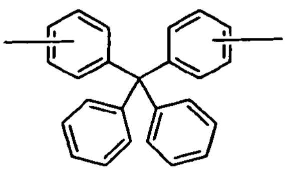

(Z2-7)

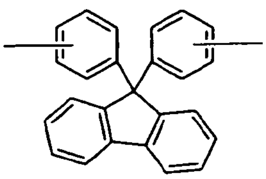

(Z2-8)

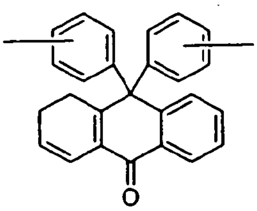

(Z2-9)

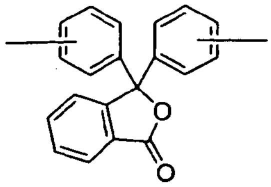

(Z2-10)

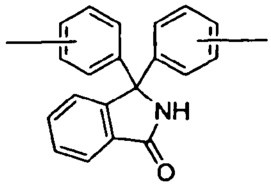

(Z2-11)

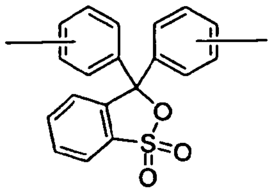

(Z2-12)

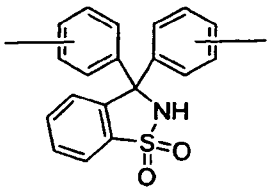

(Z2-13)

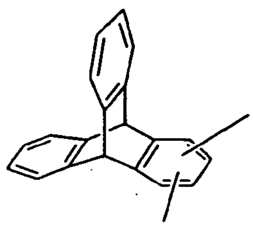

(Z2-14)

Preferred examples of organic groups shown by $R^1$ in Formula (P1-4) and Formula (P1-9) include a methyl group, an ethyl group, a propyl group, an isopropyl group, a cyclopentyl group, a cyclohexyl group, a norbonyl group, a vinyl group, an allyl group, a benzyl group, a phenyl group, a naphthyl group, and a phenylphenyl group. From the viewpoint of industrial availability, most preferred $R^1$ is a phenyl group.

As a method of introducing an ionic group into these aromatic hydrocarbon polymers, a method of polymerization using a monomer having an ionic group, and a method of introducing an ionic group by polymer reaction can be exemplified.

As a polymerization method using a monomer having an ionic group, a monomer having an ionic group in a repeating unit may be used, and an appropriate protecting group may be introduced and removed after polymerization as is necessary. Such a method is described, for example, in Journal of membrane Science, 197(2002) 231-242. This method is very preferred because of easiness of controlling the sulfonic acid group density of polymer and easiness of industrial application.

Now a method of introducing an ionic group by polymer reaction will be explained by way of examples. Introduction of a phosphonic acid group into an aromatic polymer may be achieved, for example, by a method described in Polymer Preprints, Japan , 51, 750 (2002). Introduction of a phosphoric acid group into an aromatic polymer may be achieved, for example, by phosphoric esterification of an aromatic polymer having a hydroxyl group. Introduction of a carboxylic acid group into an aromatic polymer may be achieved, for example, by oxidation of an aromatic polymer having an alkyl group or a hydroxyalkyl group. Introduction of a sulfuric acid group into an aromatic polymer may be achieved, for example, by sulfuric esterification of an aromatic polymer having a hydroxyl group. As a method of sulfonating an aromatic polymer, namely as a method of introducing a sulfonic acid group, the methods described, for example, in JP-A 2-16126 or JP-A 2-208322 are publicly known.

To be more specific, sulfonation may be achieved, for example, by reacting an aromatic polymer with a sulfonating agent such as chlorosulfonic acid in solvent such as chloroform or reacting in concentrated sulfuric acid or fuming sulfuric acid. The sulfonating agent is not particularly limited insofar as it sulfonates an aromatic polymer, and sulfur trioxide may be used in addition to those recited above. When an aromatic polymer is sulfonated in this method, the degree of sulfonation may be readily controlled by use amount of a sulfonating agent and reaction temperature and reaction time. Introduction of a sulfonimide group into an aromatic polymer may be achieved, for example, by reaction between a sulfonic acid group and a sulfonamide group.

Next, additional explanation will be made on the heterocyclic polymer in Embodiment 2 of the polymer electrolyte material of the present invention.

The heterocyclic polymer used herein refers to a polymer containing a heterocycle in a repeating unit, and the heterocycle means a ring having one or more hetero atoms, or either one of O, S and N atoms. Such a heterocycle may be in a main chain or in a side chain of the polymer, however, from the viewpoint of mechanical strength, a heterocyclic polymer containing a heterocycle in the main chain is more preferred.

Concrete examples of such a heterocycle include, but are not limited to, (h1) to (h12) below and entire hydrogen adduct and partial hydrogen adduct thereof. Two or more kinds of these heterocycles may be included in a polymer electrolyte material, and combination may bring more preferable result.

[Chemical formula 10]

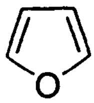 (h1) 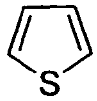 (h2)

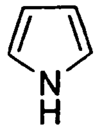 (h3) 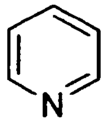 (h4)

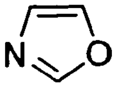 (h5) 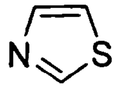 (h6)

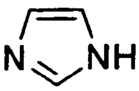 (h7) 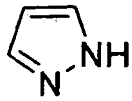 (h8)

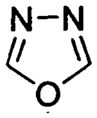 (h9) 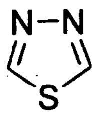 (h10)

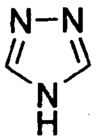 (h11) 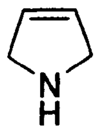 (h12)

Since the heterocyclic polymer should be effective in suppressing fuel crossover, it is preferably insoluble to 10M methanol aqueous solution at 40°C, and hence a polymer containing heterocycle in the main chain is more preferred. The term "insoluble" is used in such a case that when a polymer electrolyte membrane is immersed in 10M methanol aqueous solution at 40°C for 8 hours, and filtered through filter paper, the amount of heterocyclic polymer detected from the filter paper is 5% by weight or less of the amount of heterocyclic polymer contained in the entire polymer electrolyte membrane. In this context, methanol aqueous solution is assumed as a fuel, the behavior to methanol aqueous solution is common to other fuels, and can be generalized.

It is more preferable that the heterocyclic polymer is insoluble to N-methylpyrrolidone at 50°C because it more preferably imparts solvent resistance. The term "insoluble" is used in such a case that when a polymer electrolyte membrane is immersed in N-methylpyrrolidone at 50°C for 5 hours, and filtered through filter paper, the amount of heterocyclic polymer detected from the filter paper is 5% by weight or less of the amount of heterocyclic polymer contained in the entire polymer electrolyte membrane. In this context, N-methylpyrrolidone is assumed as a solvent for polymer electrolyte material, the behavior to N-methylpyrrolidone is common to other fuels, and can be generalized.

Next, a heterocyclic polymer used in the present invention will be concretely explained. The heterocyclic polymer used in the present invention is not particularly limited insofar as it mingles with the used hydrocarbon polymer having an ionic group substantially uniformly and the obtained polymer electrolyte material has a haze of 30% or less. A polymer which will not significantly impair the proton conductivity, exhibits fuel crossover suppressive effect and has excellent mechanical strength and solvent resistance is more preferably used.

Concrete examples thereof include, but are not limited to, hydrocarbon polymers such as polyfuran, polythiophene, polypyrrole, polypyridine, polyoxazole, polybenzoxazole, polythiazole, polybenzthiazole, polyimidazole, polybenzimidazole, polypyrazole, polybenzpyrazole, polyoxadiazole, oxadiazole ring-containing polymer, polythiadiazole, thiadiazole ring-containing polymer, polytriazole, triazole ring-containing polymer, polyamic acid, polyimide, polyether imide, polyimide sulfone and the like. A plural kinds of polymers may be used in combination.

Among these, from the view points of solvent resistance and moldability, polyoxazole, polybenzoxazole, polythiazole, polybenzthiazole, polyimidazole, polybenzimidazole, polypyrazole, polybenzpyrazole, polyoxadiazole, oxadiazole ring-containing polymer, polythiadiazole, thiadiazole ring-containing polymer, polytriazole, triazole ring-containing polymer, and polyimide are preferred, and from view point of availability of industrial product, polyoxazole, polyimidazole, and polyimide are more preferred, and from the view points of compatibility and solvent resistance, polyimide is most

preferably used.

As a heterocyclic polymer, a polymer which is insoluble to solvent is preferred from the viewpoints of fuel crossover suppressive effect, swelling suppressive effect and solvent resistance. However, when a polymer which is insoluble to solvent is used, it is most preferred to use a polymer which allows solution membrane formation as a precursor polymer and comes into insoluble to solvent by ring closure by some means such as heat treatment or ring-closing accelerator in consideration of production cost.

Among these, polyimide and polyamic acid which is a precursor thereof are most preferably used from the view point of compatibility with a hydrocarbon polymer having an ionic group, mechanical strength, and balancing of solvent resistance and solvent solubility. Polyamic acid which is a precursor of polyimide has a carboxylic acid group in addition to an amide group, so that it has very good compatibility with a hydrocarbon polymer having an ionic group.

In one exemplary preparation method of a preferred polymer electrolyte material, a hydrocarbon polymer having an ionic group substituted with alkaline metal such as sodium, and a polyamic acid which is a precursor of polyimide are mixed in solution state, and a self-supporting polyamic composite polymer electrolyte material is obtained on a carrier as a cast. Then the polyamic acid is imidized by heating and the ionic group is substituted with proton, to give a polymer electrolyte material. Since the polymer electrolyte material prepared in the above manner realizes both high proton conductivity and suppression of fuel crossover, while allowing solution membrane formation, the production cost is extremely low and solvent resistance can be imparted owing to the effect of ring-closing imidation. Therefore, a catalyst paste may be directly applied to the polymer electrolyte membrane, and production cost of a membrane electrode assembly can be greatly reduced. Hence, the polymer electrolyte material can be most preferably used.

Next, concrete explanation will be given about polyimide and its precursor, polyamic acid used in the present invention. The polyamic acid and imide used in the present invention are not particularly limited insofar as they are polymer capable of mingling with a hydrocarbon polymer having an ionic group in use substantially uniformly, having fuel crossover suppressive effect, and imparting solvent resistance. As such a polyimide, solvent-insoluble polymers which are soluble in the state of polyamic acid, and become polyimides after ring-closing imidation are more preferably used.

The polyamic acid may be synthesized by a publicly known method. For example, such a polyamic acid may be synthesized by a method of reacting tetracarboxylic dianhydride and diamine compound at low temperature, a method of obtaining diester by tetracarboxylic dianhydride and alcohol, followed by reaction in the presence of amine and a condensing agent, a method of obtaining diester by tetracarboxylic dianhydride and alcohol, and converting the remaining dicarboxylic acid into acid chloride and reacting it with amine.

Concrete examples of such an acid dianhydride include aromatic tetracarboxylic dianhydrides such as pyromellitic dianhydride, 3,3',4,4'-biphenyltetracarboxylic dianhydride, 2,3,3',4'-biphenyltetracarboxylic dianhydride, 2,2',3,3'-biphenyltetracarboxylic dianhydride, 3,3',4,4'-benzophenonetetracarboxylic dianhydride, 2,2',3,3'-benzophenonetetracarboxylic dianhydride, 2,2-bis(3,4-dicarboxyphenyl)propane dianhydride, 2,2-bis(2,3-dicarboxyphenyl)propane dianhydride, 1,1-bis(3,4-dicarboxyphenyl)ethane dianhydride, 1,1-bis(2,3-dicarboxyphenyl)ethane dianhydride, bis(3,4-dicarboxyphenyl)methane dianhydride, bis(2,3-dicarboxyphenyl)methane dianhydride, bis(3,4-dicarboxyphenyl)sulfone dianhydride, bis(3,4-dicarboxyphenyl)ether dianhydride, 1,2,5,6-naphthalene tetracarboxylic dianhydride, 2,3,6,7-naphthalene tetracarboxylic dianhydride, 2,3,5,6-pyridine tetracarboxylic dianhydride, 3,4,9,10-perylene tetracarboxylic dianhydride, and 2,2-bis(3,4-dicarboxyphenyl)hexafluoropropane dianhydride; and aliphatic tetracarboxylic dianhydrides such as butanetetracarboxylic dianhydride, and 1,2,3,4-cyclopentane tetracarboxylic dianhydride. These may be used singly or in combination of two or more kinds.

Concrete examples of diamine include 3,4'-diaminodiphenylether, 4,4'-diaminodiphenylether, 3,4'-diaminodiphenylmethane, 4,4'-diaminodiphenylmethane, 3,4'-diaminodiphenyl sulfone, 4,4'-diaminodiphenyl sulfone, 3,4'-diaminodiphenyl sulfide, 4,4'-diaminodiphenyl sulfide, 1,4-bis(4-aminophenoxy)benzene, benzine, m-phenylenediamine, p-phenylenediamine, 1,5-naphthalenediamine, 2,6-naphthalenediamine, bis(4-aminophenoxyphenyl) sulfone, bis(3-aminophenoxyphenyl) sulfone, bis(4-aminophenoxy)biphenyl, bis{4-(4-aminophenoxy)phenyl} ether, 1,4-bis(4-aminophenoxy)benzene, 2,2'-dimethyl-4,4'-diaminobiphenyl, 2,2'-diethyl-4,4'-diaminobiphenyl, 3,3'-dimethyl-4,4'-diaminobiphenyl, 3,3'-diethyl-4,4'-diaminobiphenyl, 2,2',3,3'-tetramethyl-4,4'-diaminobiphenyl, 3,3',4,4'-tetramethyl-4,4'-diaminobiphenyl, 2,2'-di(trifluoromethyl)-4,4'-diaminobiphenyl, or compounds substituting an aromatic ring thereof with an alkyl group or a halogen atom, aliphatic cyclohexyl diamine, methylene biscyclohexylamine and the like. These may be used singly or in combination of two or more kinds.

Among these, an aromatic polyimide having a repeating unit shown by Formula (P2) below is more preferably used from the viewpoints of fuel crossover suppressive effect, solvent resistance, and mechanical strength.

[Chemical formula 11]

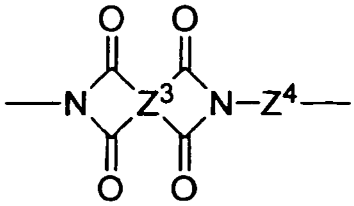

(P2)

(wherein $Z^3$ and $Z^4$ represent an organic group including an aromatic ring, and each of which may represent two or more kinds of groups)

Among these, as a more preferred polyamic acid, polyimides having excellent solvent resistance are more preferably used that are obtained by polymerizing an aromatic diamine component such as paraphenylenediamine, benzidine derivative, 4,4'-diaminodiphenylether, 3,4'-diaminodiphenylether, bisaminophenoxybenzenes and diaminobenzanilides, and an aromatic tetracarboxylic acids compound such as pyromellitic acids represented by pyromellitic acid dianhydride, 3,3'-4,4'-biphenyltetracarboxylic acid or its dianhydride, and 3,3'-4,4'-benzophenone tetracarboxylic acid or its dianhydride, in solvent.

As the solvent used in the above polymerization, dimethyl sulfoxide, N,N-dimethylacetamide, N,N-diethylacetamide, N,N-dimethylformamide, N,N-diethylformamide, N-methyl-2-pyrrolidone and dimethylsulfone and the like can be recited, and these may be preferably used singly or in combination.

The polyamic acid obtained by the above polymerization is prepared so that it occupies 10 to 30% by weight in the solvent.

In Embodiment 2 of the polymer electrolyte material of the present invention, it is preferred that the hydrocarbon polymer having an ionic group and the heterocyclic polymer mingle uniformly from the viewpoint of suppression of fuel crossover and proton conductivity. The condition that the hydrocarbon polymer having an ionic group and the heterocyclic polymer mingle uniformly refers to the condition in which two kinds of these polymers mingle each other while substantially not taking a phase separation structure in moisture state. Whether the above two kinds of polymers mingle substantially uniformly may be checked by measuring haze of polymer electrolyte material in moisture state. When haze of the polymer electrolyte material in moisture state thus measured is more than 30%, domain size of phase separation by a hydrophilic part and a hydrophobic part of, for example, the polymer electrolyte material is more than a visible light wavelength size, and it is determined that the two kinds of polymers do not mingle substantially uniformly. When haze is 30%, it is considered that the two kinds of polymers mingle in molecular level substantially uniformly, and motion of molecular chain of the hydrocarbon polymer having an ionic group is restrained by interaction with the heterocyclic polymer, or a molecular chain of the hydrocarbon polymer having an ionic group is restrained. In the condition that the hydrocarbon polymer having an ionic group and the heterocyclic polymer mingle substantially uniformly, it is expected that respective polymer chains sufficiently intertwine with each other, motions of polymers are restrained each other, fuel permeation is prevented, and dissolution to solvent is prevented.

As one exemplary method of realizing the condition in which the hydrocarbon polymer having an ionic group and the heterocyclic polymer mingle each other substantially uniformly, both the hydrocarbon polymer having an ionic group and the heterocyclic polymer are mixed in polymer solution, or at least one of the hydrocarbon polymer having an ionic group and the heterocyclic polymer is mixed in a precursor (monomer, oligomer, or precursor polymer) state, and then polymerization or reaction is conducted, to give a polymer electrolyte material. Among these, from the view point of easiness of molding and production cost, it is most preferred that a hydrocarbon polymer having an ionic group and a heterocyclic polymer are mixed in precursor state, and after formation of membrane, the step of closing ring of the precursor polymer is conducted, to give a polymer electrolyte material, which is then immersed in a methanol aqueous solution under heating. As the condition of immersion in a methanol aqueous solution under heating, temperature ranging from room temperature to 120°C, methanol aqueous solution concentration ranging from 10 to 100% by weight, and time ranging from 1 minutes to 72 hours are preferred.

In Embodiment 2 of the polymer electrolyte material of the present invention, the composition ratio between the hydrocarbon polymer having an ionic group and the heterocyclic polymer preferably contains 2 to 80% by weight of heterocyclic polymer, to the total amount of the hydrocarbon polymer having an ionic group and the heterocyclic polymer. When the heterocyclic polymer is contained in less than 2% by weight, fuel crossover suppressive effect and solvent resistance may be insufficient, and when it is contained in more than 80% by, sufficient proton conductivity may not be obtained.

Next, additional explanation will be given about the vinyl polymerization polymer in a polymer electrolyte material of the present invention in Embodiment 3. In the present invention, two or more kinds of such a vinyl polymerization polymers may be concurrently used.

Vinyl polymerization polymer used herein means polymers that are obtained from vinyl polymerizable monomers. Such a vinyl polymerization polymer may be a non-cross-linked polymer or a cross-linked polymer, however, it is

more preferably a cross-linked polymer from the viewpoint of solvent resistance.

Next, concrete explanation will be given about vinyl polymerization polymer used in Embodiment 3 of the polymer electrolyte material of the present invention. The vinyl polymerization polymer is not particularly limited insofar as it mingles with the used hydrocarbon polymer having an ionic group substantially uniformly, and the obtained polymer electrolyte material has a haze of 30% or less. A polymer which will not significantly damage the proton conductivity, and has fuel crossover suppressive effect, and are excellent in mechanical strength and solvent resistance may be more preferably used.

Concrete examples of the vinyl polymerizable monomer to be used for obtaining the vinyl polymerization polymer are not particularly limited as far as compounds having a vinyl polymerizable functional group. From the view points of material cost and ease of industrial availability, preferred examples include (meth)acrylic acid ester compounds such as methyl (meth)acrylate, ethyl (meth)acrylate, propyl (meth)acrylate, butyl (meth)acrylate, 2-ethylhexyl (meth)acrylate, dodecyl (meth)acrylate, benzyl (meth)acrylate, 2-hydroxyethyl (meth)acrylate; styrenic compounds such as polystyrene, $\alpha$-methylstyren, aminostyrene and chloromethylstyrene; (meth)acrylamide compounds such as (meth)acrylonitrile, (meth)acrylamide, N,N-dimethylacrylamide, N-acryloylmorpholine, and N-methylacrylamide; maleimide compounds such as N-phenyl maleimide, N-benzyl maleimide, N-cyclohexylmaleimide and N-isopropyl maleimide. Among these, from the viewpoint of compatibility with the hydrocarbon polymer having an ionic group, a (meth)acrylic acid ester polymer and a (meth)acrylamide polymer obtained from (meth)acrylic acid ester compound and (meth)acrylamide compounds are more preferred.

When a polymer obtained from vinyl polymerizable monomer is cross-linked, copolymerization may be conducted using those having a plurality of vinyl polymerizable functional groups among vinyl polymerizable monomers as a cross-linking agent. A polymer electrolyte material in which the one that has a plurality of polymerizable functional groups among vinyl polymerizable monomer is mingled with a polymer having an ionic group is more preferred from the viewpoints of solvent resistance and fuel crossover suppressive effect.

Examples of those having a plurality of polymerizable functional groups among vinyl polymerizable monomers include (meth)acrylic acid ester compounds such as ethyleneglycol di(meth)acrylate, diethyleneglycol di(meth)acrylate, triethyleneglycol di(meth)acrylate, polyethyleneglycol di(meth)acrylate, propyleneglycol di(meth)acrylate, dipropyleneglycol di(meth)acrylate, tripropyleneglycol di(meth)acrylate, polypropyleneglycol di(meth)acrylate, trimethyrol propanetri (meth)acrylate, pentaerythritol tetra(meth)acrylate, dipentaerythritol poly(meth)acrylate, and fluorene (meth)acrylate shown by Formula (F) below; styrenic compounds such as divylbenzene, divinylnaphthalene, and divinylbiphenyl; (meth) acrylamide compounds such as methylenebis (meth) acrylamide; and maleimide compounds such as phenylene bismaleimide, and p,p'-oxybis (phenyl-N-maleimide). Among these, from the viewpoint of compatibility with a hydrocarbon polymer having an ionic group, (meth) acrylic acid ester compounds and (meth)acrylamide compounds are more preferred. From the viewpoints of compatibility and fuel crossover suppressive effect, methylenebis(meth)acrylamide and fluorine di(meth)acrylate shown by Formula (F) are more preferred.

[Chemical formula 12]

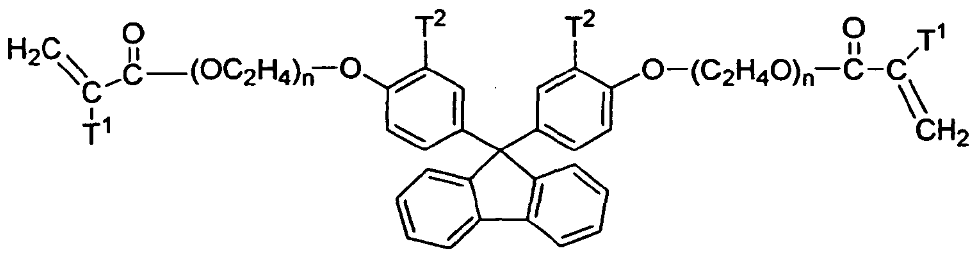

(F)

(wherein $T^1$ represents a hydrogen, or a methyl group, $T^2$ represents an arbitrary organic group, and n represents an integer)

In producing a polymer obtained from such a vinyl polymerizable monomer, a thermopolymerization initiator represented by peroxides or azos, or a photopolymerization initiator is generally added to the monomer composition in order to facilitate the polymerization.

In conducting thermopolymerization, the one that has optimum decomposition characteristic at desired reaction temperature is selected and used. Generally, a peroxide initiator having 10-hour half-life temperature of 40 to 100°C is preferred, and with such an initiator, a polymer electrolyte material without cracking can be produced.

Examples of the photopolymerication initiator include combined agents of carbonyl compound such as benzophenone and amine, mercaptan compounds, and disulfide compounds.

Such a polymerization initiator is used singly or in combination, and used in an amount of up to about 1% by

weight.

As a polymerization method, and molding method, publicly known methods may be used. For example, a polymerization method carried out between plate-like molds, or a method of polymerizing a monomer composition made into a thin film by coating or the like, in inert gas or reduced-pressure atmosphere can be recited.

As one example, a polymerization method carried out between plate-like molds will be explained below. First, a monomer composition is charged into a gap between two plate-like molds. Then the composition is molded into a membrane by photopolymerization or thermopolymerization. The plate molds are made of resin, glass, ceramics, metal and the like, and in the case of photopolymerization, an optically parent material is used and resin or glass is typically used. A gasket may be used as well as necessary for the purpose of giving a certain thickness to the membrane and preventing liquid leaking of the charged monomer composition. The plate-like molds having the monomer composition in the gap is irradiated with an active light beam such as ultraviolet ray, or polymerized by heating in an oven or liquid vessel. Also combination of photopolymerization and thermopolymerization is available, as such photopolymerization is followed by thermopolymerization or thermopolymerization is followed by photopolymerization. In the case of photopolymerization, it is general that light containing abundant ultra violet rays from light source such as mercury lamp or light trap is applied for short time (typically one hour ore shorter). In the case of thermopolymerization, the condition of gradually raising temperature from around room temperature and to the temperature of 60°C to 200°C over several hours to several tens hours is preferred for keeping the uniformity and quality and for improving the reproducibility.

Next, additional explanation will be made on a cross-linking compound having a group shown by Formula (M1) below in Embodiment 4 of the polymer electrolyte material of the present invention. In the present invention, two or more kinds of such cross-linking compounds may be used in combination.

$$-CH_2OU^1 \qquad (M1)$$

(wherein $U^1$ represents a hydrogen or an arbitrary organic group.)

Embodiment 4 of the polymer electrolyte material of the present invention is a polymer electrolyte membrane in which the polymer electrolyte material of the present invention is cross-linked by a cross-linking compound having a group shown by Formula (M1). Cross-linking with the cross-linking compound may provide effect of suppressing fuel crossover and swelling of fuel, and improve the mechanical strength, which is more preferable.

When the aromatic hydrocarbon polymer is used as a polymer electrolyte material, since polymer generally has excellent radical resistance, it is difficult to sufficiently cross-link the inside by cross-linking with radiation rays such as electron beam or y beam. However, when cross-linking is conducted with a cross-linking compound having a group shown by Formula (M1) according to the present invention, cross-linking proceeds sufficiently, and a polymer electrolyte material with excellent suppression of fuel crossover and solvent resistance can be obtained relatively easily.

In particular, from the view point of easiness of industrial availability and reaction efficiency, as the $U^1$, an alkyl group having 1 to 20 carbon(s), or a $U^2CO$ group ($U^2$ represents an alkyl group having 1 to 20 carbon(s)) are more preferred.

Examples of the cross-linking compound having a group shown by Formula (M1) used in the present invention include, as those having an organic group (M1), ML-26X, ML-24X, ML-236TMP, 4-methylol 3M6C, ML-MC, ML-TBC (commercial name, available from HONSYU CHEMICAL INDUSTRY CO., LTD.) and the like; as those having two organic groups (M1), DM-BI25X-F, 46DMOC, 46DMOIPP, 46DMOEP (commercial name, ASAHI ORGANIC CHEMICALS INDUSTRY CO., LTD.), DML-MBPC, DML-MBOC, DML-OCHP, DML-PC, DML-PCHP, DML-PTBP, DML-34X, DML-EP, DML-POP, DML-OC, dimethylol-Bis-C, dimethylol-BisOC-P, DML-BisOC-Z, DML-BisOCHP-Z, DML-PFP, DML-PSBP, DML-MB25, DML-MTrisPC, DML-Bis25X-34XL, DML-Bis25X-PCHP (commercial name, available from HONSYU CHEMICAL INDUSTRY CO., LTD.), NIKARACK (registered trademark)MX-290(commercial name, available from SANWA CHEMICAL CO., LTD.), 2,6-dimethoxymethyl-4-t-butylphenol, 2,6-dimethoxymethyl-p-cresol, 2,6-diacetoxymethyl-p-cresol and the like; as those having three organic groups (M1), TriML-P, TriML-35XL, TriML-TrisCR-HAP (commercial name, available from HONSYU CHEMICAL INDUSTRY CO., LTD.) and the like; as those having four organic groups (M1), TM-BIP-A (commercial name, ASAHI ORGANIC CHEMICALS INDUSTRY CO., LTD.), TML-BP, TML-HQ, TML-pp-BPF, TML-BPA, TMOM-BP(commercial name, available from HONSYU CHEMICAL INDUSTRY CO., LTD.), NIKARACK (registered trademark)MX-280, NIKARACK (registered trademark)MX-270 (commercial name, available from SANWA CHEMICAL CO., LTD.) and the like; and as those having six organic groups (M1), HML-TPPHBA, HML-TPHAP(commercial name, available from HONSYU CHEMICAL INDUSTRY CO., LTD.) and the like. Among these, those having at least two groups shown by Formula (M1) are preferred from the viewpoint of cross-linking in the present invention.

By adding such a cross-linking compound, swelling in fuel aqueous solution is suppressed, and both high proton conductivity and suppression of fuel crossover are realized, and solvent resistance significantly improves in the obtained polymer electrolyte material.

In such a cross-linking compound, it is estimated that polymer is cross-linked by a reaction mechanism of

binding to benzene ring by condensation accompanied with elimination of $HOU^1$.

Among these, the followings are structures of cross-linking compounds which are used particularly preferably in the present invention from the view points of ease of industrial availability, fuel crossover suppressive effect, and compatibility with a polymer having an ionic group.

[Chemical formula 13-1]

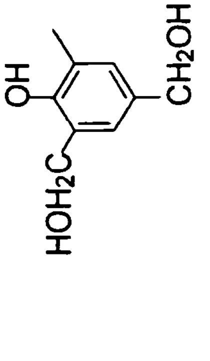

46DMOC

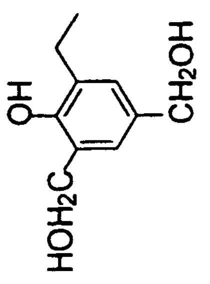

46DMOEP

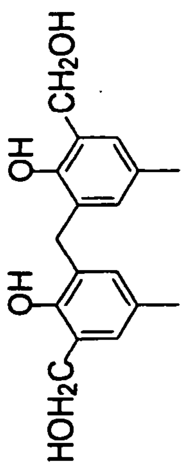

DML-MBPC

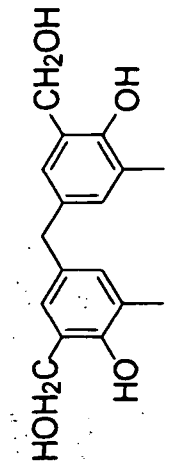

DML-MBOC

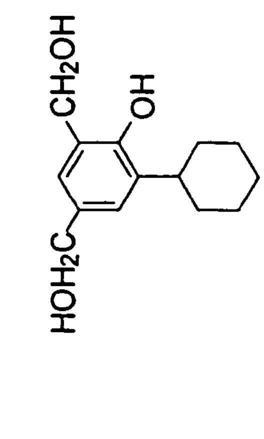

DML-OCHP

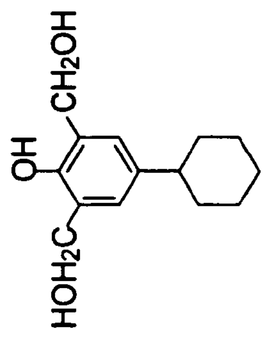

DML-PCHP

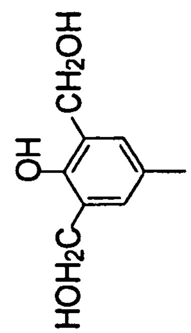

DML-PC

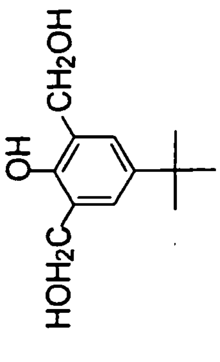

DML-PTBP

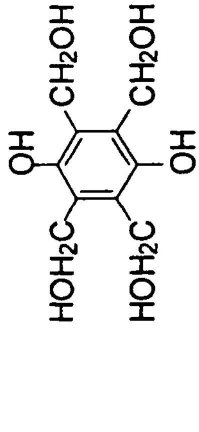

TML-HQ

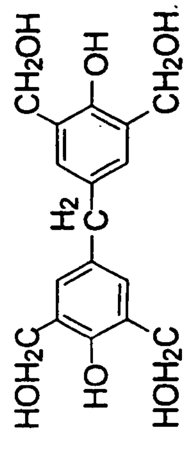

TML-pp-BPF

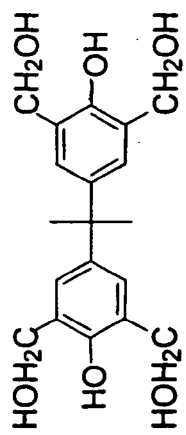

TML-BPA

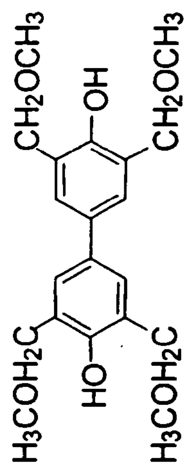

TMOM-BP

[Chemical formula 13-2]

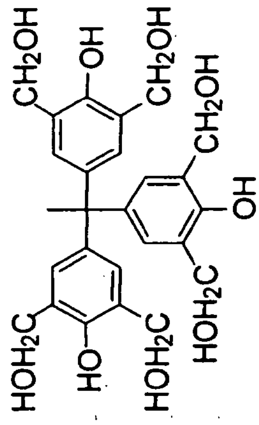

HML-TPHAP

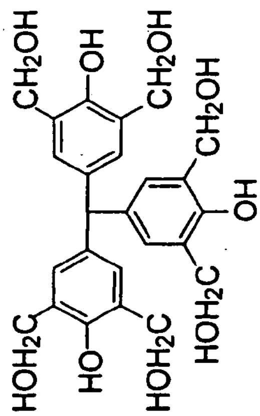

HML-TPPHBA

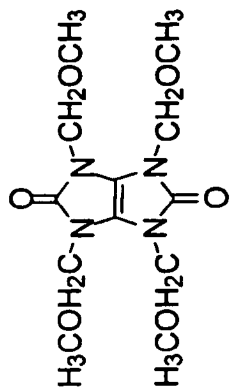

NKALAC MX-270

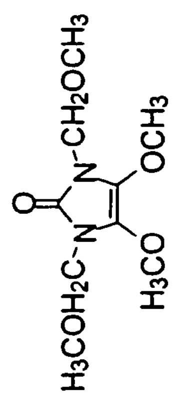

NKALAC MX-280

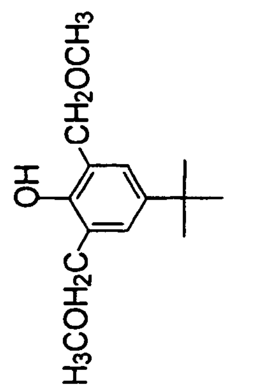

DMOM-PTBP-MF

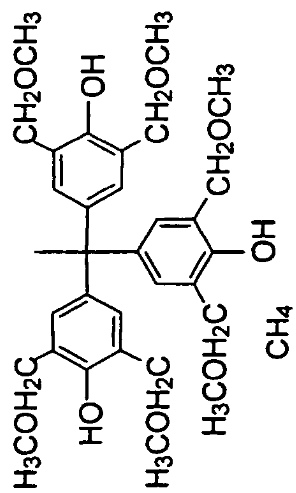

$CH_4$

HMOM-TPHPA-MF

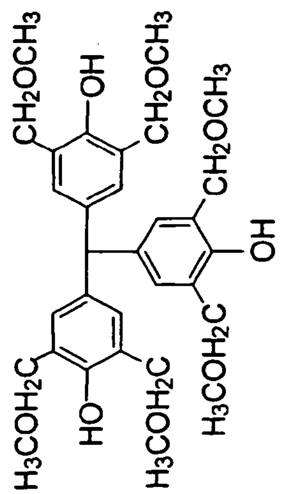

HMOM-TPPHBA

The adding amount of such a cross-linking compound is preferably from 1 to 50 parts by weight, and more preferably 3 to 40 parts by weight, relative to 100 parts by weight of polymer. When the adding amount is less than 1 part by weight, the effect of cross-linking may be insufficient, and when the adding amount is more than 50 parts by weight, the proton conductivity or the mechanical strength may be insufficient. The kind and adding amount of cross-linking compound contained in a polymer electrolyte may be analyzed by various magnetic nuclear resonance spectrum (NMR), infrared absorption spectrum (IR), pyrolysis gas chromatography and the like.

In one exemplary preparation method of a preferred polymer electrolyte material, a hydrocarbon polymer having an ionic group substituted with alkaline metal such as sodium, and a cross-linking compound having a group shown by Formula (M1) are mixed in solution state, and subjected to flow casting on a carrier, and the cross-linking compound is allowed to thermally cross-link while the solvent is evaporated, to give a self-supporting polyamic composite polymer electrolyte material. Then, the ionic group is substituted with proton, followed by immersion in methanol aqueous solution under heating. Immersion in methanol aqueous solution under heating may preferably be conducted in the condition as follows. Temperature: room temperature to 120°C, concentration of methanol aqueous solution: 10 to 100% by weight, and time: 1 minutes to 72 hours. The polymer electrolyte material prepared in this manner not only realizes both high proton conductivity and suppression of fuel crossover, but requires low production cost because it enables solution membrane formation. Further, since solvent resistance is impaired owing to the effect of cross-linking by the cross-linking compound offers, direct application of catalyst paste to the polymer electrolyte membrane is allowed, and production cost of the membrane electrode assembly can be significantly reduced. Therefore, it can be most preferably used.

As a method of realizing the condition in which the hydrocarbon polymer having an ionic group and the cross-linking compound mingle each other substantially uniformly, a preferred method of preparing a polymer electrolyte material from the view point of compatibility involves mixing the hydrocarbon polymer having an ionic group and the cross-linking compound in solution state, flow casting, and cross-linking of the cross-linking compound.

In Embodiments 1 to 4 of the polymer electrolyte material of the present invention, a compatibilizer may appropriately be used when compatibility is insufficient. Any compatibilizers may be used without any particular limitation insofar as they compatibilize the used hydrocarbon polymer having an ionic group and the heterocyclic polymer, and as such, surfactants such as straight-chain alkyl benzenesulfonates and alkyl sulfuric ester salts, organic compounds and polymers having a hydroxyl group, an ester group, an amide group, an imide group, a ketone group, a sulfone group, an ether group, a sulfonic acid group, a sulfuric acid group, a phosphonic acid group phosphoric acid group, a carboxylic acid group and the like polar group may be exemplified.

Still another preferred embodiment of the polymer electrolyte material of the present invention is a polymer having the above ionic group and having an aromatic ring in the main chain (CE-2), wherein the ionic group is sulfonic acid group, and the sulfonic acid group density is 0.3 to 1.18 mmol/g (hereinafter, also referred to as Embodiment 5).

A preferred production process of Embodiment 5 of the polymer electrolyte material will be described below. In one exemplary method of forming a polymer having a sulfonic acid group, $-SO_3M$ form (M is metal) polymer in solution state is applied by flow casting, followed by heat treatment at high temperature, and proton substitution, and then the resultant product is immersed in methanol aqueous solution under warming. The metal M should form a salt with sulfonic acid, and Li, Na, K, Rb, Cs, Mg, Ca, Sr, Ba, Ti, V, Mn, Fe, Co, Ni, Cu, Zn, Zr, Mo, W and the like are preferred from the view points of cost and environmental load, and among these, Li, Na, K, Ca, Sr, Ba are more preferred, and Li, Na, K are further preferred. Although the reason is not apparent, by forming in this manner, fraction of non-freezing water Rw and Wnf of the present invention is obtained, and both high proton conductivity and fuel crossover are realized.

The temperature of the heat treatment is preferably 200 to 500°C, more preferably 250 to 400°C, and further preferably 300 to 350°C from the view point of fraction of non-freezing water in the obtained polymer electrolyte part and fuel barrier property. The temperature of 200°C or more is preferred for obtaining the fraction of non-freezing water defined in the present invention. On the other hand, the temperature of 500°C or less prevents decomposition of polymer.

The heat treatment time is preferably from 1 minute to 24 hours, more preferably 3 minutes to 1 hour, and further preferably from 5 minutes to 30 minutes from the view point of fraction of non-freezing water, proton conductivity and productivity of the obtained polymer electrolyte part. When the heat treatment time is too short, the effect is poor, and the fraction of non-freezing water of the present invention may not be obtained, whereas when the time is too long, decomposition of polymer and thus deterioration in proton conductivity may occur, and productivity decreases.

In one exemplary method of forming $-SO_3M$ form polymer from a solution state, ground $-SO_3H$ form polymer is immersed in an aqueous solution of salt of M or hydroxide of M, washed thoroughly with water, dried, and then dissolved in an aprotic polar solvent or the like, to prepare a solution. This solution is then applied to a glass plate or a film by appropriate coating method, and then the solvent is removed, and acid treatment is conducted to achieve proton substitution.

As a condition of immersion in methanol aqueous solution under warming, the temperature is preferably from room temperature to 120°C, the concentration of methanol aqueous solution is preferably from 10 to 100% by weight, and the time is preferably from 1 minute to 72 hours.

When a polymer electrolyte material of the present invention is used for a fuel cell, it is normally used in the

form of membrane as a polymer electrolyte membrane or as an electrocatalyst layer. However, the polymer electrolyte material of the present invention may take various forms depending on the use application, such as plate, fiber, hollow fiber, particle, mass and the like without limited to membrane.

The method for transforming the polymer electrolyte material of the present invention (Embodiments 1 to 5) into a membrane is not particularly limited, and a method of forming membrane from solution state or a method of forming membrane from melted state can be recited. In the former, one exemplary method involves dissolving the polymer electrolyte material in a solvent such as N,N-dimethylacetamide or N-methyl-2-pyrrolidone, applying the resultant solution on a glass plate or the like by flow casting, and removing the solvent to form a membrane. The solvent used in formation of membrane is not particular limited insofar as it dissolves the polymer and is removable thereafter, and preferred examples of which include aprotic polar solvents such as N,N-dimethylacetamide (DMAc), N,N-dimethylformamide (DMF), N-methyl-2-pyrrolidone(NMP), dimethylsulfoxide(DMSO), sulfolane, 1,3-dimethyl-2-imidazolidinone (DMI), and hexamethylphosphonetriamide, or alkyleneglycol monoalkyl ethers such as ethyleneglycol monomethylether, ethyleneglycol monoethylether, propyleneglycolmonomethylether, and propyleneglycolmonoethylether. Examples of solvent which may be used in combination with the above solvents include alcohols represented by methanol and ethanol, ketones represented by acetone and 2-butanone, esters represented by ethyl acetate and butyl acetate, ethers represented by diethyl ether, tetrahydrofuran and dioxane, and amines represented by triethylamine and ethylenediamine. Membrane thickness may be controlled by solution concentration or application thickness onto a substrate. When a membrane is formed from a melted state, melt pressing or melt extrusion may be employed.

Another preferred form of the polymer electrolyte material of the present invention is a polymer electrolyte material having a gap, porosity of 5 to 80 volume %, and mean pore size of gap of less than 50 nm, and has an ionic group inside the gap (hereinafter, also referred to as Embodiment 6).

In the following, specific embodiment of the polymer electrolyte material (Embodiment 6) will be explained.

The polymer that constitutes the polymer electrolyte material of the present invention (Embodiment 6) may be a thermosetting resin or a crystalline or noncrystalline thermoplastic resin, or may contain an inorganic matter, inorganic oxide or organic-inorganic composite, however, those capable of forming a gap, and structured to allow residence of ion group inside the gap are used.

Therefore, at least one of monomer forming the polymer preferably has an ionic group or allows introduction of an ionic group in a post processing. The term "introduction" used herein means the condition in which an ionic group is not readily eliminated by physical means such as washing, for example, the condition in which an ionic group is chemically bonded to the polymer itself, the condition in which a substance having an ionic group is strongly adsorbed to surface of the polymer, or the condition in which a substance having an ionic group is doped.

Further, in the polymer constituting the polymer electrolyte material of the present invention (Embodiment 6), it is preferred that a repeating unit having an ionic group and a repeating unit other than that coexist alternately, and they are appropriately separated in such a degree that the repeating continuity of repeating units having an ionic group will not impair proton conduction. With such a construction, it is possible to prevent the repeating unit parts having an ionic group from excessively containing lower melting point water, or to control the fuel crossover to low. In addition, it is possible to improve water resistance of the polymer electrolyte material, and to prevent occurrence of crack or decomposition.

In other words, a copolymer of a monomer having or allowing introduction of an ionic group, and a monomer other than that is preferred. Furthermore, from the balance between fuel crossover and proton conductivity, it is preferred that a unit having an ionic group and a unit other than that are alternately coupled, or a part of alternate polymerization abundantly exists. A copolymer containing abundant of repeating units of alternate copolymerization may be obtained by copolymerizing a vinyl monomer having positive e value and a vinyl monomer having negative e value. The term "e value" used herein represents a charge state of a vinyl group or radical terminal of a monomer, and is e value of Qe concept whose detailed description is found, e.g., in "POLYMER HANDBOOK" (attributed to J.BRANDRUP et al.).

As a vinyl monomer which may be used in Embodiment 6, those shown by Formula (D1) to (D3) below may be exemplified.

$$CH_2=C\,(J_1)COOJ_2 \qquad (D1)$$

(wherein $J_1$ represents a substituent selected from a hydrogen, a methyl group and a cyano group, $J_2$ represents a substituent selected from a hydrogen, an alkyl group having 1 to 20 carbon (s), an aryl group and derivatives thereof.)

[Chemical formula 14]

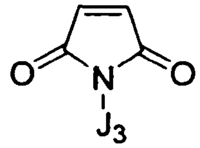

(D2)

(wherein $J_3$ represents a substituent selected from an alkyl group having 1 to 20 carbon atom (s), an aryl group, an aralkyl group and a cycloalkyl group.)

$CH_2=C(J_4)(J_5)$ (D3)

(wherein $J_4$ represents a substituent selected from a hydrogen and a methyl group, $J_5$ represents a substituent selected from a hydrogen, a hydroxyl group, a sulfonic acid group, an alkyl group having 1 to 20 carbon (s), and a phenyl group, a cyclohexyl group, a cyano group, an amide group, a halogen-containing alkyl group and derivative thereof.)

Concrete examples of vinyl monomer include aromatic vinyl monomers such as acrylonitrile, methacrylonitrile, polystyrene, α-methylstyren, p-methylstyrene, o-ethylstyrene, m-ethylstyrene, p-ethylstyrene, p-tert-butylstyrene, chlorostyrene, 1,1-diphenylethylene, vinylnaphthalene, vinylbiphenyl, indene and acenaphthylene; (meth)acrylic monomers such as methyl (meth)acrylate, cyclohexyl (meth)acrylate, isobornyl (meth)acrylate, adamantyl (meth) acrylate, phenyl (meth) acrylate, benzyl (meth) acrylate, 2-hydroxyethyl (meth)acrylate, 2-hydroxypropyl (meth) acrylate, 2-hydroxybutyl (meth)acrylate, lauryl (meth)acrylate, stearyl (meth)acrylate, isooctyl (meth)acrylate, n-octyl (meth)acrylate, isobutyl (meth)acrylate and t-butyl (meth)acrylate; N-methyl maleimide, N-n-butyl maleimide, N-phenyl maleimide, N-o-methylphenyl maleimide maleimide, N-m-methylphenyl maleimide, N-p-methylphenyl maleimide, N-o-hydroxyphenyl maleimide, N-m-hydroxyphenyl maleimide, N-p-hydroxyphenyl maleimide, N-o-methoxyphenyl maleimide, N-m-methoxyphenyl maleimide, N-p-methoxyphenyl maleimide, N-o-chlorophenyl maleimide, N-m-chlorophenyl maleimide, N-p-chlorophenyl maleimide, N-o-carboxyphenyl maleimide, N-m-carboxyphenyl maleimide, N-p-carboxyphenyl maleimide, N-o-nitrophenyl maleimide, N-m-nitrophenyl maleimide, N-p-nitrophenyl maleimide, N-ethyl maleimide, N-isopropyl maleimide, N-isobutyl maleimide, N-tert-butyl maleimide, N-cyclohexyl maleimide, N-benzyl maleimide, maleic anhydride, acrylic acid, methacrylic acid, crotonic acid, cinnamic acid, maleic acid, fumaric acid, citraconic acid, mesaconic acid, itaconic acid, methallylsulfonic acid, 2-acrylamide-2-methylpropane sulfonic acid, sulfomethylstyrene, p-polystyrenesulfonic acid, sodium p-styrene sulfonate, potassium p-styrene sulfonate, vinyl benzoic acid, sodium vinyl benzoate salt, potassium vinyl benzoate salt, vinyl acetate, vinyl propionate, vinyl sulfonic acid, vinyl sulfuric acid, 2,2,2-trifluoroethyl (meth)acrylate, 2,2,3,3-tetrafluoropropyl (meth)acrylate, 1H, 1H, 5H-octafluoropentyl (meth)acrylate, 1H, 1H, 2H, 2H-heptadecafluorodecyl (meth)acrylate and the like fluorine-containing monomer.

Among these, from the view point of easiness of introduction of an ionic group and polymerization operability, aromatic monomers such as polystyrene, α-methylstyren, vinyl naphthalene, vinyl biphenyl, indene and acenaphthylene are preferably used.

As for combination, when an aromatic vinyl monomer having negative e value, such as polystyrene or α-methylstyren is selected, it is preferred to use a vinyl monomer having positive e value, into which introduction of an ionic group is difficult, from the reason as described above, and from the view point of fuel crossover suppressive effect, acrylonitrile, methacrylonitrile, N-phenyl maleimide, N-isopropyl maleimide, N-cyclohexyl maleimide, N-benzyl maleimide, 2,2,2-trifluoroethyl (meth)acrylate, 2,2,3,3-tetrafluoropropyl (meth)acrylate, 1H, 1H, 5H-octafluoropentyl (meth)acrylate, 1H, 1H, 2H, 2H-heptadecafluorodecyl (meth)acrylate and the like fluorine-containing monomers are preferred.

Further, it is more preferred that the polymer electrolyte material of the present invention (Embodiment 6) has a cross-linked structure. Definition of cross-linked structure is as described above. With a cross-linked structure, expansion between polymer chains caused by entry of water or fuel is suppressed. Therefore, it is possible to control moisture content such as lower melting point water which is excess for proton conduction at low level, and to suppress swelling and decomposition caused by fuel, with the result that fuel crossover can be reduced. Further, since a polymer chain can be constrained, heat resistance, rigidity, chemical resistance and the like can be imparted. Further, excellent shape retention of gap is realized as described below. Further, when an ionic group is introduced after polymerization, it is possible to selectively introduce an ionic group into a wall part inside gap with high efficiency. The cross-linking may be chemical cross-linking or physical cross-linking. This cross-linked structure may be formed by copolymerization of multi-functional monomer, or irradiation with radiation rays such as electron beams, y rays and the like. Cross-linking by multi-functional monomers are particularly preferred from the economical view.

Concrete examples of the multi-functional monomer used in formation of cross-linked structure include di-, tri-, tetra-, penta-, hexa-(meth)acrylates of polyols such as ethyleneglycol di(meth)acrylate, diethyleneglycol di(meth)acrylate, triethyleneglycol di(meth)acrylate, glycerol (di/tri)(meth)acrylate, trimethylol propane (di/tri)(meth)acrylate, pentaerythritol (di/tri/tetra)(meth)acrylate, dipentaerythritol (di/tri/tetra/penta/hexa)(meth)acrylate, di(metha)acrylic biphnol, and bisphenoxy ethanol (meth)fluorine diacrylate; polyoxyethylene polyesters such as polyethyleneglycol di(meth)acrylate (preferably, average molecular weight of polyethyleneglycol moiety: about 400 to 1000), methoxypolyethyleneglycol mono(meth)acrylate, di (meth) acrylate of bisphenol A ethylene oxide 30 molar adduct, di(meth)acrylate of glycerin ethylene oxide adduct, tri(meth)acrylate of glycerin ethylene oxide adduct, di(meth)acrylate of trimethylolpropaneethylene oxide adduct, tri (meth) acrylate of trimethylolpropaneethylene oxide adduct, di(meth)acrylate of sorbitol ethylene oxide adduct, di(meth)acrylate of sorbitol ethylene oxide adduct, tri(meth)acrylate of sorbitol ethylene oxide adduct, tetra(meth) acrylate of sorbitol ethylene oxide adduct, penta(meth)acrylate of sorbitol ethylene oxide adduct and hexa (meth) acrylate of sorbitol ethylene oxide adduct; aromatic multi-functional monomers such as o-divinylbenzene, m-divinylbenzene, p-divinylbenzene, divinylbiphenyl, and divinylnaphthalene; esters such as di (meth) acrylic acid ester, di(meth)acrylic acid diallyl ester, and divinyl adipate; diallyl compounds such as diethyleneglycol bisallyl carbonate, and diallyl phthalate; dienes such as butadiene, hexadiene, pentadiene, and 1,7-octadiene; monomers having phosphazene backbone in which a polymerizable multi-functional group is introduced into dichlorophosphazene as a base material,; multi-functional monomers having hetero atom cyclic backbone such as triallyldiisocyanurate; bis maleimide, methylenebisacrylamides and the like.

Among these, from the view point of mechanical strength and chemical resistance in introduction of an ionic group, aromatic multi-functional monomers such as divinylbenzene, di-, tri-, tetra-, penta-, or hexa-(meth)acrylates of polyols such as ethyleneglycol di(meth)acrylate, bisphenoxy ethanol (metha)fluorine diacrylate are particularly preferred.

From the view point of retention of form, the molecular weight of the copolymer obtained from the monomers as described above is 4000 or more by weight average molecular weight. Further, the upper limit is not particularly limited because it has a cross-linked structure.

As the multi-functional monomer used in formation of a cross-linked structure, one kind may be singly used or two or more kinds may be used in combination.

The polymer electrolyte material of the present invention (Embodiment 6) has gap, which is used while being filled with medium such as water in normal use as a polymer electrolyte material. It is normally expected that a gap in the polymer electrolyte material will increase the fuel crossover, however, in the polymer electrolyte material (Embodiment 6) having a gap in the present invention, by providing a specific gap, high proton conductivity is achieved while fuel crossover is suppressed. In particular, in the polymer electrolyte material of the present invention (Embodiment 6), for example, when methanol water is used as a fuel, change in swelling degree of the entire polymer electrolyte material by concentration of methanol in methanol water is small, so that there arises an advantage that methanol crossover suppressive effect becomes much greater at higher concentration of fuel than the existent material (for example, perfluorinated electrolyte polymer).

Porosity for the polymer electrolyte material of Embodiment 6 is 5 to 80 volume %, preferably 10 to 60 volume %, and more preferably 20 to 50 volume %. The fuel crossover may possible be related with moisture content in the polymer electrolyte material, however, moisture content can also be optimized by controlling the porosity. Porosity may be determined based on the balance between desired proton conductivity and fuel crossover value. From the view point of improvement of proton conductivity, porosity is set at 5% or more, and from the view point of suppression of fuel crossover, the porosity is set at 80% or less.

Porosity is determined in the following manner. For a particular polymer electrolyte material, volume A ($cm^3$) after immersion for 24 hours in water at 25°C, and weight W(g) after hot-air drying at 60°C for 6 hours are measured, and using a value of real density D($g/cm^3$) of dried polymer, porosity is determined by the following equation.

$$\text{Porosity}\ (\%) = [(A - W/D)/A] \times 100$$

Real density D can be measured by using a polymer density measuring device ULTRAPYCNOMETER 1000 available from Yuasa Ionics Inc..

When there is crystal water or non-freezing water which is difficult to be eliminated in the above measurement condition, the volume occupied by such water is not considered as a gap.

The form of a gap may be such that it penetrates from one side face to the opposite side face in a membrane form (continuous pore), or may be a separate pore, however, continuous pore is preferred because of its good proton conductivity. The pore may be branched.

The gap may be continuous pore or separate pore, however from the view point of balance between proton conductivity and fuel crossover suppressive effect, infinite net-shaped gap, or conversely, a three-dimensional net structure in which polymer runs sterically is preferred. When the gap is a continuous pore, the entire path between the front and back faces is preferably 50 nm or less.

Average pore size of the gap is less than 50 nm, preferably 30 nm or less, and more preferably 10 nm or less.

When it is 50 nm or more, the fuel crossover suppressive effect tends to be insufficient. On the other hand, average lower limit of pore size of gap is preferably 0.1 nm or more, and by setting it at 0.1 nm or more, water penetrates into the polymer electrolyte material, and proton conductivity is ensured.

Pore size of gap is shown by an average value of pore sizes of gap in a cross section of polymer electrolyte material. This gap may be measured by observation under a scanning electron microscope (SEM), a transmissive electron microscopy (TEM) and the like. An average value may be determined in the following manner. From an image of 100 nm$\pm$30nm ultrathin section of cross section of polymer electrolyte material stained with osmium tetraoxide, the maximum diameter of a part stained in spot is taken as a pore size, and the pore sizes of 20 or more, preferably 100 or more gaps are averaged. Typically, 100 gaps are measured. When measurement with different stain or without using osmium tetraoxide is preferred, such as the case that a membrane itself is stained by osmium tetraoxide, a part which looks like a spot by shade and shadow of image is observed as a gap. The part which is apparently stained in line shape (crack occurring at the preparation of section) is eliminated.

Further, there is an ionic group in a polymer electrolyte material of the present invention (Embodiment 6). Preferably, the ionic group exists inside its gap. The term "inside" means inner face of the gap and gap part per se. Preferably, it means the condition that there is an ionic group in the inner face of the gap. An ionic group may exist in other part than inside the gap. The expression "there is an ion group" used herein means the condition in which an ionic group is not readily eliminated from inside a gap by physical means such as washing, for example, the condition in which an ionic group is chemically bonded to the polymer itself, the condition in which a substance having an ionic group is strongly adsorbed to surface of the polymer, or the condition in which a substance having an ionic group is retained in the gap.

As for the ionic group in Embodiment 6, the same ideas as described above applies.

In introducing an ionic group into the polymer electrolyte material of the present invention (Embodiment 6), a monomer before polymerization may already have an ionic group, however, an ionic group may be introduced after polymerization. From the view points of breadth of selectivity of material, and easiness of monomer preparation, an ionic group is preferably introduced after polymerization.

Specifically, a method of producing the polymer electrolyte membrane (Embodiment 6) of the present invention includes the step of removing a pore-forming agent from a membrane after obtaining a membrane-like polymer from a monomer composition containing a monomer into which an ionic group can be introduced and a pore-forming agent, or after forming a membrane from a polymer composition containing a polymer into which an ionic group can be introduced and a pore-forming agent, and the step of introducing an ionic group into the polymer.

As a monomer into which an ionic group can be introduced, an aromatic vinyl monomer such as polystyrene or $\alpha$-methylstyren having negative e value as described above may be used among vinyl monomers.

As the polymerization of vinyl monomer as described above including these, for example, radical polymerization is preferred from the view point of operability. Examples of a radical generation initiator include a variety of peroxide compounds, azo compounds, peroxides and cerium ammonium salts.

Concrete examples include azonitrile compounds such as 2,2'-azobisisobutylonitrile, 1,1'-azobis(cyclohexane-1-carbonitrile), 2,2'-azobis(4-methoxy-2,4-dimethylvaleronitrile), 2,2'-azobis(2-cyclopropylpropionitrile), 2,2'-azobis(2,4-dimethylvaleronitrile), 2,2'-azobis(2-methylbutylonitrile), 1-[(1-cyano-1-methylethyl)azo]formamide, and 2-phenylazo-4-methoxy-2,4-dimethylvaleronitrile; azoamidine compounds such as 2,2'-azobis(2-methyl-N-phenylpropioneamidine) diacid salt; cyclic azoamidine compounds such as 2,2'-azobis[2-(5-methyl-2-imidazoline-2-yl)propane] diacid salt; azoamide compounds such as 2,2'-azobis{2-methyl-N-[1,1-bis(hydroxymethyl)-2-hydroxyeth yl]propionamide}; alkylazo compounds such as 2,2'-azobis(2,4,4-trimethylpentane); peroxides such as potassium persulfate, ammonium persulfate, hydrogen peroxide and benzoyl peroxide; and cerium ammonium salts such as ceric ammonium sulfate and cerium diammonium nitrate.

In addition, polymerization by a photo initiator utilizing radiation ray, electron beam, ultraviolet ray and the like may be adopted.

As a photo initiator, carbonyl compounds, peroxides, azo compounds, sulfur compounds, halogenated compounds and metal salts can be exemplified.

When a multi-functional monomer is contained, molding and membrane formation based on cast polymerization utilizing heat or light are preferred. Cast polymerization is a method of polymerization in which a mixture of various monomer, a pore-forming agent and an initiator is injected between two plates, sheets or films having a predetermined clearance by a gasket or spacer, and energy such as heat or light is applied to cause polymerization. This method may be conducted in batch manner or in continuous manner.

For example, a composition solution in which about 0.01 to 2 parts by weight of a photo initiator represented by Dalocure (registered trademark), Irgacure (registered trademark) (available from CIBA) is added to the used monomer composition is injected between two sheets made of quartz glass, polyethylene, polypropyrene or amorphous polyolefin and sealed, and then subjected to light irradiation at illumination intensity of about 0.01 to 100mW/$cm^2$ for about 0.1 second to 1 hour using an ultraviolet lamp to cause polymerization.

When the proton conductivity is prioritized as the characteristic required for a certain polymer, it is preferred to introduce an ionic group inside the polymer. For achieving this, it is effective to conduct polymerization while a pore-forming agent that assists introduction of an ionic group is added in advance to a monomer prior to polymerization. Such a pore-forming agent itself need not have an ability of directly introducing an ionic group. In other words, in permeation of substance capable of introducing an ionic group into polymer, at least a part of pore-forming agent is removed by replacement with a substance that is able to introduce an ionic group by decomposition, reaction, evaporation, sublimation, or elution of itself, or by replacement with a solvent containing such a subject, to facilitate introduction of an ionic group into the part inside the polymer where an ionic group can be introduced.

The pore-forming agent occupies a part of monomer composition or polymer composition during polymerization of membrane formation, and forms a gap inside the polymer electrolyte material when it is removed after polymerization or membrane formation.

The kind of the pore-forming agent may be appropriately selected from organic compounds, solvents, soluble polymers, salts, metals and the like depending on the compatibility with a material of polymer, the chemical and solvent used in extraction or decomposition, or the way of removing the pore-forming agent such as heating, solvent immersion, light, electron beam or radiation treatment. The pore-forming agent may be liquid or powder, and a measure which positively leaves oligomers made up of the used monomers, unreacted monomers and byproducts as a pore-forming agent may be taken. Also the agent that becomes liquid and solid by reaction such as metal alkoxide may be used.

It is preferred to select the one that will not adversely influence on the polymer electrolyte material even when a part of pore-forming agent remains in polymer after introduction of an ionic group, or the product generating by reaction leaves.

When the pore-forming agent is blended prior to polymerization, a pore-forming agent having melting point and decomposition temperature which are higher than polymerization temperature is preferred.

Concrete examples of the pore-forming agent include ethylene carbonate, propylene carbonate, methyl cellosolve, diglyme, toluene, xylene, trimethylbenzene, γ-butyrolactone, dimethylformamide, dimethyl acetamide, N-methyl-2-pyrrolidone, 1,4-dioxane, carbon tetrachloride, dichloromethane, nitromethane, nitroethane, acetic acid, acetic anhydride, dioctyl phthalate, di-n-octyl phthalate, trioctyl phosphate, decalin, decane, hexadecane, titanium tetrabutoxide, titanium tetraisopropoxide, tetramethoxy silane and tetraethoxy silane, which may be used singly or in combination of two or more kinds.

Use amount of the pore-forming agent may be appropriately set depending on the combination of used the pore-forming agent and monomer, desired porosity and pore size, and it is added in an amount of preferably 1 to 80% by weight, more preferably 5 to 50% by weight, and further preferably 10 to 30% by weight in the entire composition including the pore-forming agent. When the use amount of the pore-forming agent is less than 1% by weight, an ionic group is difficult to be introduced inside the polymer, and thus proton conductivity is poor. When the use amount is more than 80% by weight, the content of lower melting point water increases and the fuel permeation amount increases, which is undesirable.

After obtaining a membrane-like polymer, or after forming a membrane from a polymer composition, the pore-forming agent is removed from the membrane. This is conducted to form a gap.

For removing the pore-forming agent, for example, the membrane may be immersed in a solvent which is able to remove the pore-forming agent. The solvent that is able to remove the pore-forming agent is appropriately selected from water and organic solvents. Preferred examples of the organic solvent include halogenated hydrocarbons such as chloroform, 1,2-dichloroethane, dichloromethane and perchloroethylene, nitrated hydrocarbons such as nitromethane and nitroethane, alcohols such as methanol and ethanol, aromatic hydrocarbons such as toluene and benzene, aliphatic hydrocarbons such as hexane, heptane and decane, esters such as ethyl acetate, butyl acetate and ethyl lactate, ethers such as diethylether, tetrahydrofuran, and 1,4-dioxane, and nitriles such as acetonitrile. One kind of these may be singly used or two or more kinds of these may be used in combination.

After removing the pore-forming agent from the polymer, the solvent may be removed by drying or the like, or may not be removed.

The method of introducing an ionic group by polymer reaction is as described for the method of introducing an ionic group in Embodiment 2 and Embodiment 3.

Next, explanation will be given about introduction of an ionic group into the above polymer in membrane. In order to obtain a polymer electrolyte membrane from the membrane formed of polymer containing a pore-forming agent, it is important to at least make the ionic group reside inside gap in the membrane, and for achieving this, an ionic group is introduced by an ionic group introducing agent. The ionic group introducing agent used herein refers to a compound capable of introducing an ionic group into at least a part of repeating unit in the ionic group constituting the polymer, and usually a known one may be used. As a concrete example of the ionic group introducing agent, when a sulfonic acid group is introduced, concentrated sulfuric acid, chlorosulfonic acid or fuming sulfuric acid, sulfur trioxide and the like are preferred, and most preferred from the view point of easiness of reaction control and productivity is chlorosulfonic acid. When a sulfonamide group is introduced, sulfonamide is preferred.

In order to introduce an ionic group into a copolymer in membrane, a measure of immersing the membrane into an ionic group introducing agent or into a mixture of ionic group introducing agent and solvent may be concretely employed. As the solvent mixed with the ionic group introducing agent, those not reacting or reacting insignificantly with an ionic group introducing agent and capable of penetrating into the polymer may be used. Preferred examples of such solvent include halogenated hydrocarbons such as chloroform, 1,2-dichloroethane, dichloromethane, and perchloroethylene, nitrated hydrocarbons such as nitromethane, and nitroethane, and nitriles such as acetonitrile. The solvent and the ionic group introducing agent may be used singly or in combination of two or more kinds.

Carrying out removal of a pore-forming agent from membrane and introduction of an ionic group into polymer in a single step is preferred from the view point of reduction in number of steps.

More specifically, it is preferred to simultaneously conduct removal of the pore-forming agent from the membrane and introduction of ionic group into the polymer (sulfonation) by immersing the membrane into a solution in which an ionic group introducing agent (for example, the above sulfonating agent) is added to a solvent capable of removing the pore-forming agent. In this case, the pore-forming agent in the membrane is removed while being substituted by the solution containing an ionic group. This method is preferred because the degree of introduction of ionic group can be controlled with high accuracy. In this case, as the solvent capable of removing the pore-forming agent, those not reacting or reacting insignificantly with the ionic group introducing agent and capable of penetrating into the polymer are used. The solvent capable of removing the pore-forming agent may be a single system or a mixed system of two or more kinds.

When an ionic group introduction auxiliary agent for assisting introduction of ionic group is contained in monomer/polymer composition prior to membrane formation, it is preferred that the ionic group introduction auxiliary agent is also a removable solvent.

In light of the above points, as a solvent that is able to remove the pore-forming agent, for example, halogenated hydro carbons such as chloroform or 1,2-dichloroethane, dichloromethane, and perchloroethylene, nitrated hydrocarbons such as nitromethane and nitroethane, and nitriles such as acetonitrile are preferred.

In Embodiment 6, a polymer electrolyte material is first converted into $-SO_3M$ form (M is metal) by ion exchange, and subjected to heat treatment at high temperature and proton substitution, and immersion in a methanol aqueous solution under warming. Through this process, values of Rw and Wnf defined in the present invention can be achieved.

The metal M should form a salt with sulfonic acid, and Li, Na, K, Rb, Cs, Mg, Ca, Sr, Ba, Ti, V, Mn, Fe, Co, Ni, Cu, Zn, Zr, Mo, W and the like are preferred from the view points of cost and environmental load, and among these, Li, Na, K, Ca, Sr, Ba are more preferred, and Li, Na, K are further preferred. Although the reason is not apparent, by forming in this manner, fraction of non-freezing water Rw and Wnf of the present invention is obtained, and both high proton conductivity and fuel crossover are realized.

As a method of first converting a polymer electrolyte material into $-SO_3M$ form (M is metal) by ion exchange, a method of immersing the $-SO_3M$ form polymer electrolyte material into an aqueous solution of salt of M or hydroxide of M can be exemplified.

The temperature of the heat treatment is preferably 200 to 500°C, more preferably 250 to 400°C, and further preferably 300 to 350°C from the view point of fraction of non-freezing water in the obtained polymer electrolyte part and fuel barrier property. The temperature of 200°C or more is preferred for obtaining the fraction of non-freezing water defined in the present invention. On the other hand, the temperature of 500°C or less prevents decomposition of polymer.

The heat treatment time is preferably from 1 minute to 24 hours, more preferably 3 minutes to 1 hour, and further preferably from 5 minutes to 30 minutes from the view point of fraction of non-freezing water, proton conductivity and productivity of the obtained polymer electrolyte part. When the heat treatment time is too short, the effect is poor, and the fraction of non-freezing water of the present invention may not be obtained, whereas when the time is too long, decomposition of polymer and thus deterioration in proton conductivity may occur, and productivity decreases.

As a condition of immersion in methanol aqueous solution under warming, the temperature is preferably from room temperature to 120°C, the concentration of methanol aqueous solution is preferably from 10 to 100% by weight, and the time is preferably from 1 minute to 72 hours.

When the polymer electrolyte material of the present invention is used for a fuel cell, it may be used as a variety of polymer electrolyte parts. Examples of the polymer electrolyte part include a polymer electrolyte membrane and an electrocatalyst layer.

Preferred film thickness of the polymer electrolyte membrane made or the polymer electrolyte material of the present invention is typically 3 to 2000 μm. For obtaining practically tolerant strength of membrane, the thickness is preferably more than 3 μm, and for reduction of membrane resistance, namely, for improvement of power generating performance, the thickness is preferably less than 2000 μm. The membrane thickness is more preferably in the range of 5 to 1000 μm, and further preferably in the range of 10 to 500 μm.

Membrane thickness may be controlled, for example, by solution concentration or application thickness onto the substrate when the membrane is formed by a solvent casting method, and may be controlled, for example, by thickness of spacer between plates when the membrane is formed by cast polymerization.

The polymer electrolyte material of the present invention may be copolymerized with other component or

blended with other polymer compound without departing from the object of the present invention. Also, stabilizers such as various antioxidants based on hindered phenol, hindered amine, thioether and phosphor, and various additives represented by plasticizer, colorant, and a mold release agent may be added unless the characteristic is not impaired.

Furthermore, various polymers, elastomers, fillers, microparticles may be contained so as to improve mechanical strength, heat stability and workability unless adverse affect is exerted on the various characteristics as described above.

The polymer electrolyte part uses the polymer electrolyte material of the present invention. It may take various forms depending on the use application, such as plate, fiber, hollow fiber, particle, mass and the like as well as membrane as described above.

Processing into such a shape may be carried out by coating, extrusion molding, press molding, cast polymerization and the like, however, when a three-dimensional cross-linked structure is imparted to a polymer electrolyte material, cast polymerization between glass plates or continuous belts using heating or light is preferred.

The membrane electrode assembly of the present invention uses the polymer electrolyte material of the present invention.

The membrane electrode assembly (MEA) is formed of a membrane of polymer electrolyte material, and an electrode formed of an electrocatalyst layer and an electrode substrate.

The electrocatalyst layer is a layer including an electrode catalyst that promotes electrode reaction, electron conductor, ion conductor and so on.

Preferred examples of the electrode catalyst included in the electrocatalyst layer include platinum, palladium, ruthenium, rhodium, iridium, gold and the like precious metal catalysts. Among these, one kind may be singly used, or two or more kinds may be used in combination as an alloy or a mixture.

As an electron conductor (conductive material) included in the electrocatalyst layer, carbon materials and inorganic conductive materials are preferably used from the view point of electron conductivity and chemical stability. Among others, noncrystalline and crystalline carbon materials are recited. For example, carbon blacks such as channel black, thermal black, furnace black, acetylene black are preferably used because of their electron conductivity and specific surface area. Examples of the furnace black include VALCAN (registered trademark)XC-72, VALCAN (registered trademark)P, BLACKPEARLS (registered trademark) 880, BLACKPEARLS (registered trademark) 1100, BLACKPEARLS (registered trademark)1300, BLACKPEARLS (registered trademark) 2000, REGAL (registered trademark) 400 available from Cabot Corporation, KETJENBLACK (registered trademark) EC, EC600JD available from KETJENBLACK INTERNATIONAL Company Ltd., and #3150, #3250 available from Mitsubishi Chemical Corporation, and examples of acetylene black include DENKABLACK (registered trademark) available from DENKI KAGAKU KOGYO. Besides the carbon black, natural graphite, pitch, coke, artificial graphite or carbon obtained from organic compound such as polyacrylonitrile, phenol resin, furan resin and the like may be used. Such a carbon material to be used may be in the form of fiber, scale, tube, cone, megaphone as well as infinite particles. Also, these carbon materials may be used after being subjected to post processing.

Preferably, the electron conductor is dispersed uniformly with the catalyst particles from the view point of electrode performance. Therefore, it is preferred that the catalyst particles and the electrode conductor are dispersed in advance as an application fluid. Further, it is also preferred that as the electrocatalyst layer, catalyst carrying carbon or the like in which catalyst and electron conductor are integrated is used. By using such a catalyst carrying carbon, use efficiency of catalyst increase, which contributes to improvement of cell performance and cost reduction. Here, even when catalyst carrying carbon is used in the electrocatalyst layer, an electric conductor may be added in order to further improve the electric conductivity. As such an electric conductor, carbon black as described above is preferably used.

As a substance having ion conductivity (ion conductor) used in the electrocatalyst layer, various organic and inorganic materials are generally known, however, when it is used in a fuel cell, a polymer having an ionic group such as a sulfonic acid group, a carboxylic acid group or a phosphoric acid group that improves ion conductivity (ion conducting polymer) is preferably used. Among these, from the view point of stability of an ionic group, polymer having ion conductivity formed of fluoroalkyl ether side chain and fluoroalkyl main chain, hydrocarbon ion conducting polymer, or polymer electrolyte material of the present invention is preferably used. As a perfluorinated ion conducting polymer, for example, Nafion (registered trademark) available from Du Pont, Aciplex (registered trademark) available from Asahi Kasei Corporation., Flemion (registered trademark) available from ASAHI GLASS CO., LTD. and the like are preferably used. These ion conducting polymers are provided in the form of solution or dispersion in the electrocatalyst layer. In this case, the solvent in which the polymer is dissolved or dispersed is not particularly limited, however it is preferably a polar solvent from the view point of dissolubility of ion conducting polymer.

Since the catalysts and electron conductors as described above are typically powder, the ion conductor usually plays a role of solidifying these. From the view point of electrode performance, it is preferred that the ion conductor is added in advance to an application liquid composed mainly of electrocatalyst particles and an electron conductor at the time of preparing the electrocatalyst layer, and applied while it is uniformly dispersed. However, the ion conductor may be applied after application of the electrocatalyst layer. Here, as a technique of applying the ion conductor to the electrocatalyst layer, spray coating, application with brush, dip coating, dye coating, curtain coating, flow coating and the

like are exemplified, but are not limited thereto. The amount of ion conductor contained in the electrocatalyst layer is appropriately selected depending on the required electrode characteristic or conductivity of used ion conductor, and is preferably, but is not particularly limited to, in the range of 1 to 80% by weight ratio, and more preferably in the range of 5 to 50%. Both larger and smaller amounts of ion conductor may reduce the electrode performance because too small amount results in low ion conductivity, and too large amount prevents gas permeation.

The electrocatalyst layer may includes various substances besides the aforementioned catalyst, electron conductor, and ion conductor. In particular, for improving binding of substances contained in the electrocatalyst layer, a polymer other than the ion conducting polymer may be contained. Examples of such a polymer include polyvinyl fluoride (PVF), polyvinylidene fluoride (PVDF), polyhexafluoro propylene (FEP), porytetrafluoroethylene, polyperfluorinated alkyl vinyl ether (PFA) and the like fluorine atom containing polymers, and copolymers thereof, copolymers of a monomer unit that forms these polymers, and other monomer such as ethylene or polystyrene, or blend polymers. Content of such a polymer in the electrocatalyst layer is preferably in the range of 5 to 40% by weight ratio. When the content of polymer is too large, resistance of electron and ion increases and the electrode performance tends to decrease.

When the fuel is liquid or gas, the electrocatalyst layer preferably has a structure in which the liquid or gas is easy to permeate, and also has a structure that promotes discharge of side product substance accompanying the electrode reaction.

As the electrode substrate, those exhibiting low electric resistance and capable of collecting or supplying electricity can be used. When the electrocatalyst layer is used also as a power collector, an electrode substrate may not be necessarily used. As a material that forms the electrode substrate, for example, carbon substances and conductive inorganic substances are recited, and examples include burned substance from polyacrylonitrile, burned substance from pitch, carbon substances such as graphite and exfoliated graphite, stainless steel, molybdenum and titanium. Forms of these are not particularly limited, and they are used in the form of fiber or particle, however, fibrous conductive substances (conductive fiber) such as carbon fiber are preferred from the view point of fuel permeability. As an electrode substrate using conductive fiber, both woven and nonwoven fabrics can be used. For example, carbon paper TGP series, SO series available from TORAY Industries. Inc., and carbon cloth available from E-TEK are used. As woven fabric, plain weave, twill weave, sateen weave, figured weave, tapestry weave and the like are used without any particular limitation. As nonwoven fabric, those obtained by papermaking technique, needle punching technique, span bonding technique, water jet punching technique, melt blowing technique and the like are used without any particular limitation. Also, knit fabric may be used. In these cloths, when carbon fiber is used, in particular, woven fabric which is obtained by carbonizing or graphitizing plain weave using flame-proofed spun yarn, nonwoven fabric which is obtained by subjecting flame-proofed yarn to non-woven process by needle punching technique or water jet punching technique, followed by carbonization or graphitization, mat nonwoven fabric produced by papermaking technique using flame-proofed yarn or carbonized yarn or graphitized yarn, and the like are preferably used. In particular, nonwoven fabric is preferably used because thin and strong cloth is obtained.

When conductive fiber made of carbon fiber is used for the electrode substrate, as the carbon fiber, polyacrylonitrile (PAN) carbon fiber, phenol carbon fiber, pitch carbon fiber, rayon carbon fiber and the like can be exemplified.

The electrode substrate may be subjected to water repellent finish for preventing reduction in gas diffusion and permeation due to retention of water, or partial water repellent or hydrophilic finish for forming a discharge path of water, or addition of carbon powder for lowering the resistance.

In the polymer electrolyte fuel cell of the present invention, it is preferred to provide a conductive intermediate layer containing at least an inorganic conductive substance and a hydrophobic polymer between the electrode substrate and the electrocatalyst layer. In particular, when the electrode substrate is carbon fiber knit or nonwoven fabric having large porosity, it is possible to prevent reduction in performance caused by the electrocatalyst layer penetrating into the electrode substrate, by providing a conductive intermediate layer.

The method of producing a membrane electrode assembly (MEA) using a polymer electrolyte membrane of the present invention, and using an electrocatalyst layer or an electrocatalyst layer and an electrode substrate is not particularly limited. Methods publicly known in the art (for example, Chemical plating method described in "Electrochemistry", 1985, 53, 269., heat press bonding method of gas diffusion electrode described in "J. Electrochemical Society" (J. Electrochem. Soc.): Electrochemical Science and Technology, 1988, 135 (9), 2209. and the like) can be employed. Integration by heat press is a preferred technique, and the temperature and pressure in this technique may be appropriately selected depending on the thickness of polymer electrolyte membrane, moisture content, electrocatalyst layer and electrode substrate. Further, pressing may be conducted in the condition that the polymer electrolyte membrane is moisturized, and bonding by polymer having ion conductivity may also be applicable.

When the polymer electrolyte material of the present invention is formed into a polymer electrolyte part such as a polymer electrolyte membrane, electrocatalyst layer and the like, or into MEA, in measurement and calculation of Rw and/or Wnf defined in the present invention, the polymer electrolyte part is regarded as a polymer electrolyte material.

For example, when the polymer electrolyte membrane contains a reinforcing material such as porous membrane, fiber, cloth or microparticles, or an additive such as stabilizer, or when the polymer electrolyte membrane is formed of

mixture of plural different materials, measurement of weight or measurement of Wf, Wfc, Wt, Wnf and the like can be carried out while regarding the polymer electrolyte membrane in such a composite state as a polymer electrolyte material.

The same applies to the electrocatalyst layer, and measurement of weight or measurement of Wf, Wfc, Wt, Wnf and the like can be carried out while regarding the electrocatalyst layer in the condition of containing catalyst metal, catalyst carrying carbon and the like as a polymer electrolyte material.

When the polymer electrolyte material of the present invention is formed into a MEA, the above measurements may be carried after disintegration or separation into the polymer electrolyte part. As a fuel for the polymer electrolyte fuel cell of the present invention, oxygen, hydrogen and methane, ethane, propane, butane, methanol, isopropyl alcohol, acetone, ethyleneglycol, formic acid, acetic acid, dimethylether, hydroquinone, cyclohexane and the like organic compounds having 1 to 6 carbon(s), as well as mixture of these and water are exemplified, and these may be used singly or in combination of two or more kinds. Particularly from the view points of power generation efficiency and simplification of system of the entire cell, a fuel including an organic compound having 1 to 6 carbon (s) is preferably used, and particularly preferred from the view point of power generation efficiency is a methanol aqueous solution.

Content of the organic compound having 1 to 6 carbon(s) in the fuel supplied to the membrane electrode assembly is preferably 1 to 100% by weight. By setting the content at 1% by weight or more, it is possible to obtain practically high energy capacity.

Examples

In the following, the present invention will be explained more specifically, however, these examples are given for better understanding of the present invention, and the present invention is not limited to these examples. Chemical structure formulas inserted in these examples are provided for assisting reader's understanding.

[Measurement method]

(1) Sulfonic acid group density

A sample (about 0. 2 g) was immersed in 30% methanol aqueous solution (1000 times or more of sample amount by weight ratio) at 60°C under stirring for 12 hours, then immersed in pure water (1000 times or more of sample amount by weight ratio) at 20°C under stirring for 24 hours, and the immersed in fresh pure water (1000 times or more of sample amount by weight ratio) at 20°C under stirring for 24 hours. The obtained sample was dried in a vacuum dryer (50°C, full vacuum, 24 hours).

About 0. 68 g of oxalic dihydrate was accurately weighed, and an oxalic acid solution was prepared in a 100 $cm^3$ measuring flask. Then about 2 g of sodium hydroxide was dissolved in about 500 mL of purified water, and an aqueous solution of sodium hydroxide was prepared. After leaving for a day, sodium hydroxide was evaluated by using the oxalic acid solution. Then dry sample was weighed in a hermetical vessel, added with 40 $cm^3$ saturated saline, and the generated hydrochloric acid was titrated with the sodium hydroxide aqueous solution. As an indicator, phenolphthalein was used, and the point at which it turned pale red-purple was determined as a terminal point. Ion exchange capacity was determined according to the following formula.

Sulfonic acid group density (mmol/g) = concentration of sodium hydroxide aqueous solution ($mol\ cm^{-3}$) × drop amount ($cm^3$) / sample weight (g)

(2) Weight average molecular weight

Weight average molecular weight of polymer was measured by GPC. Using HLC-8022GPC available from TOSOH Corporation as an integrated device of an UV detector and a differential refractometer, and two TSK gel Super HM-H (inner diameter 6.0mm, length 15 cm) available from TOSOH Corporation as a GPC column, measurement was executed in N-methyl-2-pyrrolidone solvent (N-methyl-2-pyrrolidone solvent containing 10 mmol/L of lithium bromide) at flow rate of 0.2 mL/min, and weight average molecular weight was determined by conversion based on standard polystyrene.

(3) Amount of non-freezing water Wnf, and fraction of non-freezing water Rw

A sample was immersed in 30% by weight methanol aqueous solution (1000 times or more of sample amount by weight ratio) at 60°C under stirring for 12 hours, then immersed in pure water at 20°C (1000 times or more of sample amount by weight ratio) under stirring for 24 hours, and then taken out, and excess surface adhered water was quickly wiped and removed with gauze, and then input into a sealed-type aluminum sample vessel having aluminum coating whose weight Gp is measured in advance. After crimping the vessel, a total weight Gw of the sample and the sealed-type sample vessel was measured as quick as possible, and immediately subjected to differential scanning calorimetry (DSC) analysis.
Temperature program of DSC included cooling from room temperature to -30°C at a speed of 10°C/min. and raising temperature to 5°C at a speed of 0.3°C/min., and measurement was conducted in the raising course.
Device and condition for DSC measurement are as follows.

DSC device: DSC Q100 available from TA Instruments
Data processor: TRC-THADAP-DSC available from TORAY RESEARCH CENTER, Inc.
Measuring temperature range: -30 to 5°C
Scanning speed: 0.3°C/min.
Sample amount: about 5 mg
Sample pan: aluminum hermitical sample container with aluminum coating

After DSC measurement, the hermetical sample container having a sample therein was pierced to make a small hole, dried in vacuum for 24 hours at 110°C by a vacuum dryer, and then total weight Gd of the sample and the hermetical sample container was weighed as quickly as possible. Dry sample weight m is determined by m=Gd-Gp, and total water amount Wt was determined by Wt=(Gw-Gd)/m.
From a DSC curve in this temperature raising course, bulk water amount (Wf) was determined according to the equation (n1) below, and low melting point water amount (Wfc) was determined according to the equation (n2) below, and by subtracting these values from the total moisture content (Wt), non-freezing water amount (Wnf) was determined (the equation (n3) above).
In calculation, as melting point $T_0$ of the bulk water, and as melting enthalpy $\Delta H_0$ at melting point of the bulk water, the following values were used.

$T_0$=0.0 (°C)
$\Delta H_0$=79.7 (cal/g) =334(J/g)

This measurement was deposited and carried out at TORAY RESEARCH CENTER, Inc.

(4) Membrane thickness

Membrane thickness was measure by a contact-type membrane thickness meter.

(5) Proton conductivity

A membrane-like sample was immersed in 30% methanol aqueous solution (1000 times or more of sample amount by weight ratio) at 60°C under stirring for 12 hours, then immersed in pure water (1000 times or more of sample amount by weight ratio) at 20°C under stirring for 24 hours, and then taken out into atmosphere of 25°C, relative humidity of 50 to 80%, and proton conductivity was measured as quickly as possible by constant potential AC impedance method.
As a measurement device, electrochemical measuring system (Solartron 1287 Electrochemical Interface and Solartron 1255B Frequency Response Analyzer) available from Solartron was used. A sample was gripped by application of 1 kg of weight between two circular electrodes (made of stainless) of φ2mm and φ10mm. Effective electrode area is 0.0314 $cm^2$. 15% aqueous solution of poly(2-acrylamide-2-methylpropane sulfonic acid) was applied to an interface between the sample and the electrode. At 25°C, constant potential AC impedance measurement was carried out at AC amplitude of 50 mV, and proton conductivity in the membrane thickness direction was determined. The value was represented by the value per unit area.

(6) Permeation amount of methanol

A membrane-like sample was immersed in 30% methanol aqueous solution (1000 times or more of sample amount by weight ratio) at 60°C under stirring for 12 hours, then immersed in pure water (1000 times or more of sample

amount by weight ratio) at 20°C under stirring for 24 hours, and then measurement was conducted at 20°C using 30% by weight methanol aqueous solution.

A sample membrane was sandwiched between H-shape cells, and one cell was added with pure water (60mL) and the other cell was added with 30% by weight methanol aqueous solution (60mL). The capacity of each cell was 80mL. Area of opening between cells was 1. 77 $cm^2$. At 20°C, both cells were stirred. At lapses of 1 hours, 2 hours and three hours, an mount of methanol eluting into the pure water was measured and quantified using a gas chromatography (GC-2010) available from SHIMADZU Corporation. From inclination of graph, methanol permeation amount per unit time was determined. The value was represented by the value per unit area.

(7) Haze measuring method of polymer electrolyte membrane

As a sample, a polymer electrolyte membrane in moisture state, namely a polymer electrolyte membrane which was immersed in 1000 times by weight of pure water at 25°C for 24 hours was used, and after wiping the water drops on the surface, haze (Hz%) was measured using a full automatic direct reading haze computer (SUGA TEST INSTRUMENTS Co., Ltd.: HGM-2DP).

(8) Weight reduction with respect to N-methylpyrrolidone (NMP)

After sufficiently washing a polymer electrolyte material (about 0. 1 g) which is to be a specimen with pure water, the weight was measured after drying in vacuum at 40°C for 24 hours. The polymer electrolyte material was immersed in 1000 times by weight of N-methylpyrrolidone, and heated at 50°C for 5 hours under stirring in a hermetical container. Then the mixture was filtered through filter paper (No. 2) available from Advantech. In filtration, the filter paper and the residue were washed with 1000 times weight of the same solvent to allow the elutes to thoroughly elute in the solvent. From the weight of the residue measured after drying in vacuum at 40°C for 24 hours, weight reduction was calculated.

(9) Bending test

A membrane-like sample was immersed in 30% methanol aqueous solution (1000 times or more of sample amount by weight ratio) at 60°C under stirring for 12 hours, then immersed in pure water (1000 times or more of sample amount by weight ratio) at 20°C under stirring for 24 hours, and then taken out, and the membrane was bent by 90 degrees. The appearance of membrane at this time was visually evaluated. A: no breakage or cracking observed; B cracking observed partly; and C; breakage observed.

(10) Evaluation of MEA and polymer electrolyte fuel cell

A membrane electrode assembly (MEA) was set in a cell available from ElectroChem Inc., and MEA evaluation was conducted while charging 30% methanol aqueous solution on the anode side and charging air on the cathode side. In evaluation, a constant current was applied to MEA, and the voltage at this time was measured. The current was sequentially increased until voltage was 10 mV or less. At each measurement point, product of current and voltage is output, and the maximum value (per unit area of MEA) was determined as output ($mW/cm^2$).

Energy capacity was calculated by Formula (n4) below based on output and MCO at MEA.

As for MCO at MEA, exhaust gas from the cathode was sampled by a trapping tube. This was then evaluated by using a total organic carbon meter TOC-VCSH (available from SIMADZU), or by a micro GC CP-4900 (gas chromatograph available from GL sciences). MCO was calculated by measuring the sum of MeOH and carbon dioxide in sampling gas.

[Equation 2]

$$\text{Energy capacity}=\frac{\text{Output}}{1000}\times\frac{96500\times 6\times \text{Volume}\times\dfrac{\text{Concentration}}{100}\times\dfrac{1}{32}}{3600\times\left\{96500\times\dfrac{\text{MCO}}{60}\times\dfrac{1}{1000000}\times 6+\dfrac{\text{Current density}}{1000}\right\}}\quad (n4)$$

Energy capacity: Wh
Output: maximum output density ($mW/cm^2$)
Volume: volume of fuel (calculated by 10 mL in this Example)
Concentration: methanol concentration of fuel (%)
MCO: MCO at MEA ($\mu mol\cdot min^{-1}\cdot cm^{-2}$)
Current density: current density when maximum output density is obtained ($mA/cm^2$)

Comparative example 1

Using a commercially available Nafion (registered trademark) 117 membrane (available from Du Pont), ion conductivity, MCO and haze, weight reduction with respect to N-methylpyrrolidone were evaluated. Nafion (registered trademark) 117 membrane was immersed in 5% hydrogen peroxide solution at 100°C for 30 minutes, and then in 5% diluted sulfuric acid at 100°C for 30 minutes, and the washed well with deionized water at 100°C. Evaluation results are summarized in Table 1. Rw was small and methanol permeation amount was large.

Synthesis example 1

Synthesis of disodium

3,3'-disulfonate-4,4'-difluorobenzophenone (G1)

[Chemical formula 15]

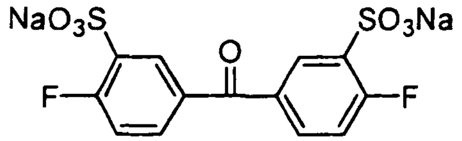

(G1)

109.1 g of 4,4'-difluorobenzophenone was reacted in 150mL of fuming sulfuric acid (50% $SO_3$) at 100°C for 10 hours. Then the reaction was put little by little into abundant water, and neutralized with NaOH, to which 200 g of NaCl was added, to make synthesized product precipitate. The resultant precipitate was separated by filtration and recrystallized in ethanol aqueous solution, to give disodium 3,3'-disulfonate-4, 4' -difluorobenzophenone shown by the above Formula (G1).

Synthesis example 2 (not part of the invention)

Synthesis of polymer (sulfonic acid group density 1.7mmol/g) shown by Formula (G2)

[Chemical formula 16]

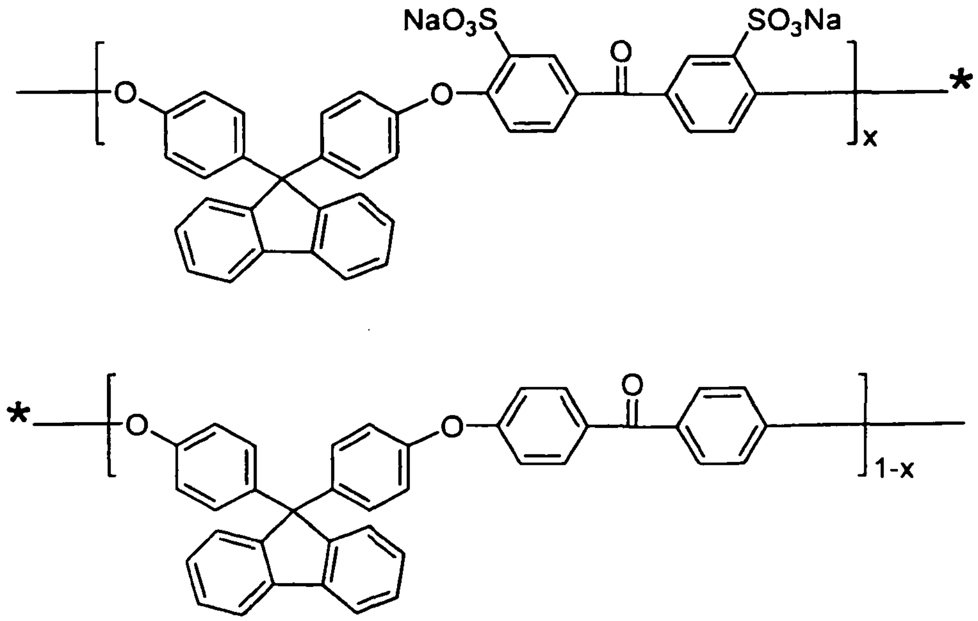

(G2)

(wherein * represents that the right end of the upper formula and the left end of the lower formula connect each other at that position)

Using 6.9 g of potassium carbonate, 14.1 g of 4,4'-(9H-fluorene-9-ylidene)bisphenol, 4.4 g of 4,4'-difluorobenzophenone, and 8.4 g of disodium 3,3'-disulfonate-4,4'-difluorobenzophenone obtained in the above Synthesis example 1, polymerization was conducted at 190°C in N-methylpyrrolidone(NMP). Purification was conducted by reprecipitation in abundant water, and polymer shown by above Formula (G2) was obtained. Sulfonic acid group density after proton substitution of the obtained polymer was 1.7 mmol/g, weight average molecular weight was 220,000.

Synthesis example 3

Synthesis of polymer (sulfonic acid group density 1.1mmol/g) shown by (G2)

Using 6.9 g of potassium carbonate, 14.1 g of 4,4'-(9H-fluorene-9-ylidene)bisphenol, 6.1 g of 4,4'-difluorobenzophenone, and 5.1 g of disodium 3,3'-disulfonate-4,4'-difluorobenzophenone obtained in the above Synthesis example 1, polymerization was conducted at 190°C in N-methylpyrrolidone(NMP). Purification was conducted by reprecipitation in abundant water, and polymer shown by above Formula (G2) was obtained. Sulfonic acid group density after proton substitution.of the obtained polymer was 1.1 mmol/g, weight average molecular weight was 220,000.

Synthesis example 4

Synthesis of polymer (sulfonic acid group density 1.lmmol/g) shown by Formula (G3)

[Chemical formula 17]

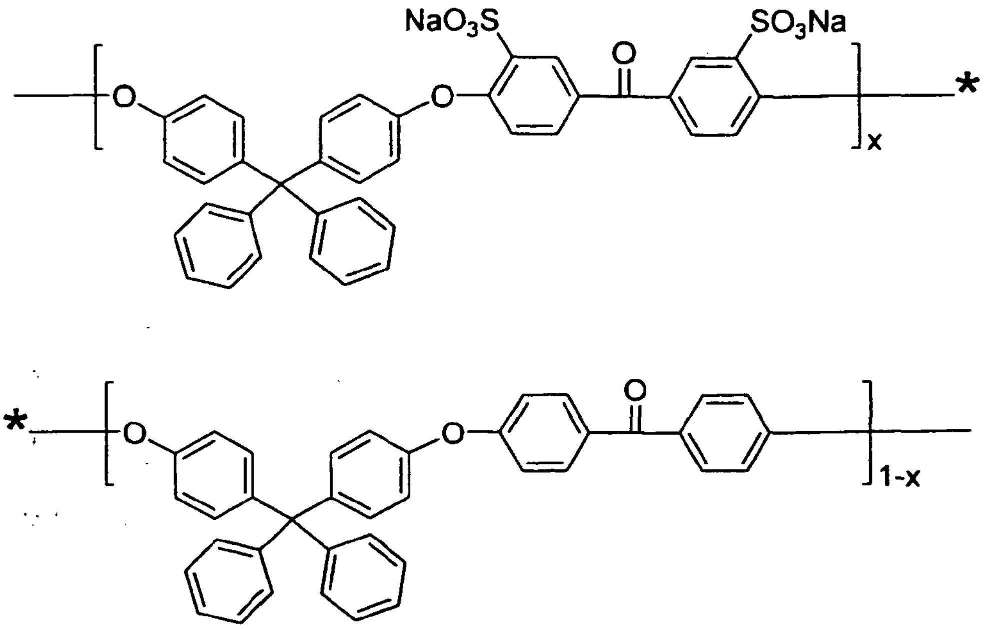

(G3)

(wherein * represents that the right end of the upper formula and the left end of the lower formula connect each other at that position)

Using 6.9 g of potassium carbonate, 14.1 g of 4,4'-dihydroxytetraphenylmethane, 6.1 g of 4,4'-difluorobenzophenone, and 5.1 g of disodium 3,3'-disulfonate-4,4'-difluorobenzophenone obtained in the above Synthesis example 1, polymerization was conducted at 190°C in N-methylpyrrolidone(NMP). Purification was conducted by reprecipitation in abundant water, and polymer shown by above Formula (G3) was obtained. Sulfonic acid group density after proton substitution of the obtained polymer was 1.1 mmol/g, weight average molecular weight was 220,000.

Synthesis example 5

Synthesis of polymer (sulfonic acid group density 0.9 mmol/g) shown by Formula (G3)

Using 6.9 g of potassium carbonate, 14.1 g of 4,4'-dihydroxytetraphenylmethane, 6.5 g of 4,4'-difluorobenzophenone, and 4.2 g of disodium 3,3'-disulfonate-4,4'-difluorobenzophenone obtained in the above Synthesis example 1, polymerization was conducted at 190°C in N-methylpyrrolidone(NMP). Purification was conducted by reprecipitation in abundant water, and polymer shown by above Formula (G3) was obtained. Sulfonic acid group density after proton substitution of the obtained polymer was 0.9 mmol/g, weight average molecular weight was 220,000. Synthesis example 6 (not part of the invention) Synthesis of polymer (sulfonic acid group density 1.7 mmol/g) shown by Formula (G3)

Using 6.9 g of potassium carbonate, 14.1 g of 4,4'-dihydroxytetraphenylmethane, 4.4 g of 4,4'-difluorobenzophenone, and 8.4 g of disodium 3,3'-disulfonate-4,4'-difluorobenzophenone obtained in the above Synthesis example 1, polymerization was conducted at 190°C in N-methylpyrrolidone(NMP). Purification was conducted by reprecipitation in abundant water, and polymer shown by above Formula (G3) was obtained. Sulfonic acid group density after proton substitution of the obtained polymer was 1.7 mmol/g, weight average molecular weight was 220,000. Synthesis example 7 (not part of the invention)

[Chemical formula 18]

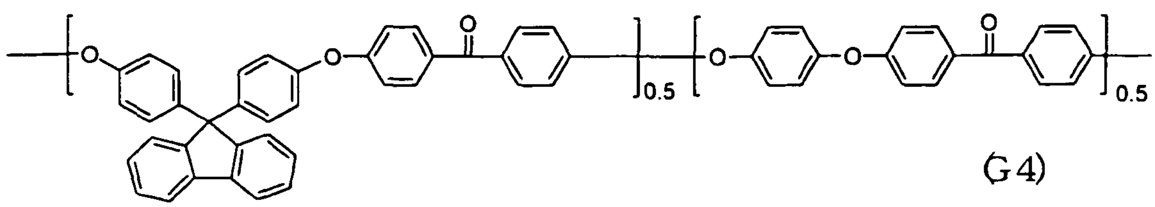

(G4)

(Synthesis of unsulfonated polymer)

Using 35 g of potassium carbonate, 11 g of hydroquinone, 35 g of 4,4'-(9H-fluorene-9-ylidene)bisphenol, and 44 g of 4,4'-difluorobenzophenone, polymerization was conducted at 160°C in N-methylpyrrolidone (NMP).
After polymerization, the reaction was washed with water and reprecipitated in abundant methanol for purification, and a polymer shown by the above Formula (G4) was quantificatively obtained. The weight average molecular weight of the polymer was 110,000.

(Sulfonation)

10 g of the polymer obtained in the above was dissolved in chloroform in $N_2$ atmosphere at room temperature, and then added dropwise with 12 mL of chlorosulfonic acid slowly under vigorous stirring to allow reaction for 5 minutes. White precipitates were separated by filtration, ground and washed well with water, and dried to give an objective sulfonated polymer.
The obtained sulfonated polymer had the sulfonic acid group density of 1.8 mmol/g.

Comparative example 2

A 25% by weight solution of the polymer obtained in Synthesis example 2 (Na form) in N-methylpyrrolidone as a solvent was prepared, and the solution was applied on a glass substrate by flow casting, and dried for 4 hours at 100°C to remove the solvent. Further, in nitrogen gas atmosphere, the temperature was raised from 200 to 325°C over one hour, and a heat treatment at 325°C for 10 minutes was conducted, and the reaction was allowed to cool. Proton substitution by immersion in 1N hydrochloric acid for one day or more, was followed by sufficient washing by immersion in excess amount of pure water for one day or more. The obtained membrane was a pale yellow clear soft membrane.
Evaluation results are summarized in Table 1. Rw was small, and methanol permeation amount was large.

Comparative example 3

After Na substitution by immersion in saturated saline, a solution of the sulfonated polymer obtained in Synthesis example 7 in N, N-dimethylacetoamide as a solvent was prepared, and the solution was applied on a glass substrate by flow casting, and dried for 4 hours at 100°C to remove the solvent. Further, in nitrogen gas atmosphere, the temperature was raised from 200 to 300°C over one hour, and a heat treatment at 300°C for 10 minutes was conducted, and the reaction was allowed to cool. Proton substitution by immersion in 1N hydrochloric acid for three days or more, was followed by sufficient washing by immersion in excess amount of pure water for three days or more.
The obtained membrane was a pale yellow membrane with haze.
Evaluation results are summarized in Table 1. Rw was small, and methanol permeation amount was large.

Example 1

A 20% by weight solution of polymer of Formula (G2) (Na form, sulfonic acid group density 1.1mmol/g) obtained in Synthesis example 3 in N-methylpyrrolidone as a solvent was prepared, and the solution was solution was applied on a glass substrate by flow casting, and dried for 4 hours at 100°C to remove the solvent. Further, in nitrogen gas atmosphere, the temperature was raised from 200 to 325°C over one hour, and a heat treatment at 325°C for 10 minutes was conducted, and the reaction was allowed to cool. Proton substitution by immersion in 1N hydrochloric acid for one day or more, was followed by sufficient washing by immersion in excess amount of pure water for one day or more. Then 5cm-squre membrane (3 pieces) was immersed in 1L of pure water for 24 hours and washed well, and immersed in 30% methanol aqueous solution (1L) at 60°C for 12 hours under stirring, and then sufficiently washed by immersion in 1L of pure water for 24 hours or more under stirring. The obtained membrane was a pale yellow clear soft membrane. Evaluation results are summarized in Table 1. Rw was large, and methanol permeation amount was small.

Example 2

A 20% by weight solution of polymer of Formula (G3) (Na form, sulfonic acid group density 1.1 mmol/g) obtained in Synthesis example 4 in N-methylpyrrolidone as a solvent was prepared, and the solution was solution was applied on a glass substrate by flow casting, and dried for 4 hours at 100°C to remove the solvent. Further, in nitrogen gas atmosphere, the temperature was raised from 200 to 350°C over one hour, and a heat treatment at 350°C for 10 minutes was conducted, and the reaction was allowed to cool. Proton substitution by immersion in 1N hydrochloric acid for one day or more, was followed by sufficient washing by immersion in excess amount of pure water for one day or more.

Then 5cm-squre membrane (3 pieces) was immersed in 1L of pure-water for 24 hours and washed well, and immersed in 30% methanol aqueous solution (1L) at 60°C for 12 hours under stirring, and then sufficiently washed by immersion in 1L of pure water for 24 hours or more under stirring. The obtained membrane was a pale yellow clear soft membrane.

Evaluation results are summarized in Table 1. Rw was large, and methanol permeation amount was small.

Example 3

A 20% by weight solution of polymer of Formula (G3) (Na form, sulfonic acid group density 0.9 mmol/g) obtained in Synthesis example 5 in N-methylpyrrolidone as a solvent was prepared, and the solution was solution was applied on a glass substrate by flow casting, and dried for 4 hours at 100°C to remove the solvent. Further, in nitrogen gas atmosphere, the temperature was raised from 200 to 325°C over one hour, and a heat treatment at 325°C for 10 minutes was conducted, and the reaction was allowed to cool. Proton substitution by immersion in 1N hydrochloric acid for one day or more, was followed by sufficient washing by immersion in excess amount of pure water for one day or more. Then 5cm-squre membrane (3 pieces) was immersed in 1L of pure water for 24 hours and washed well, and immersed in 30% methanol aqueous solution (1L) at 60°C for 12 hours under stirring, and then sufficiently washed by immersion in 1L of pure water for 24 hours or more under stirring. The obtained membrane was a pale yellow clear soft membrane.

Evaluation results are summarized in Table 1. Rw was large, and methanol permeation amount was small.

Example 4

Polymer of Formula (G2) (sulfonic acid group density 1.1mmol/g) obtained in Synthesis example 3 dissolved in N-methylpyrrolidone(NMP) and polyamic acid (TORENIES (registered trademark)#3000 available from TORAY Industries. Inc.) dissolved in N-methylpyrrolidone(NMP) were mixed in a ratio of polymer of Formula (G3)/polyamic acid=83.5/16.5 (weight ratio), and stirred for 1 hour at room temperature. The mixture solution was applied on a glass substrate by flow casting, and after predrying at 100°C for 30 minutes, in nitrogen gas atmosphere, the temperature was raised from 200 to 325°C over one hour, and a heat treatment at 325°C for 10 minutes was conducted, and the reaction was allowed to cool. Proton substitution by immersion in 1N hydrochloric acid for one day or more, was followed by sufficient washing by immersion in excess amount of pure water for one day or more. Then 5cm-squre membrane (3 pieces) was immersed in 1L of pure water for 24 hours and washed well, and immersed in 30% methanol aqueous solution (1L) at 60°C for 12 hours under stirring, and then sufficiently washed by immersion in 1L of pure water for 24 hours or more under stirring.

The sulfonic acid group density was 0.9 mmol/g. Evaluation results are summarized in Table 1. Rw was large, and methanol permeation amount was small.

Example 5

Polymer of Formula (G3) (sulfonic acid group density 1.7 mmol/g) obtained in Synthesis example 6 dissolved in N-methylpyrrolidone (NMP) and polyamic acid (TORENIES (registered trademark)#3000 available from TORAY Industries. Inc.) dissolved in N-methylpyrrolidone (NMP) were mixed in a ratio of polymer of Formula (G3)/polyamic acid=75/25 (weight ratio), and stirred for 1 hour at room temperature. The mixture solution was applied on a glass substrate by flow casting, and after predrying at 100°C for 30 minutes, in nitrogen gas atmosphere, the temperature was raised from 200 to 400°C over one hour, and a heat treatment at 400°C for 10 minutes was conducted, and the reaction was allowed to cool. Proton substitution by immersion in 1N hydrochloric acid for one day or more, was followed by sufficient washing by immersion in excess amount of pure water for one day or more. Then 5cm-squre membrane (3 pieces) was immersed in 1L of pure water for 24 hours and washed well, and immersed in 30% methanol aqueous solution (1L) at 60°C for 12 hours under stirring, and then sufficiently washed by immersion in 1L of pure water for 24 hours or more under stirring.

The sulfonic acid group density was 0.9 mmol/g. Evaluation results are summarized in Table 1. Rw was large, and methanol permeation amount was small.

Comnparative Example 5

10 g of 25% by weight of N-methylpyrrolidone (NMP) solution dissolving polymer of Formula (G3) (sulfonic acid group density 1.7mmol/g) obtained in Synthesis example 6 in N-methylpyrrolidone (NMP), 1 g of N,N'-methylene bisacrylamide (available from TOKYO CHEMICAL INDUSTRY CO., LTD.), and 1 mg of AIBN were mixed and stirred for an hour at room temperature. The mixed solution was applied onto a glass plate by flow casting, predried for 30 minutes at 100°C, and heated at 200°C for 10 minutes under nitrogen, to give a polymer electrolyte membrane. After proton substitution by immersion in 1N hydrochloric acid for one day or more, the membrane was washed well by immersion

in excess pure water for one day or more. Then 5cm-squre membrane (3 pieces) was immersed in 1L of pure water for 24 hours and washed well, and immersed in 30% methanol aqueous solution (1L) at 60°C for 12 hours under stirring, and then sufficiently washed by immersion in 1L of pure water for 24 hours or more under stirring.

The obtained membrane showed sulfonic acid group density of 1.2 mmol/g. Evaluation results are summarized in Table 1. Rw was large, and methanol permeation amount was small.

Comparative Example 6

A membrane was prepared in the same way as described in Example 1 except that 1 g of N,N'- methylene bisacrylamide (available from TOKYO CHEMICAL INDUSTRY CO., LTD.) is replaced by 1 g of fluorenic bisacrylate (available from OSAKA GAS CHEMICALS Co., Ltd.) shown by Formula (G5) below.

The obtained membrane showed the sulfonic acid group density of 1.2 mmol/g. Evaluation results are summarized in Table 1. Rw was large, and methanol permeation amount was small.

[Chemical formula 19]

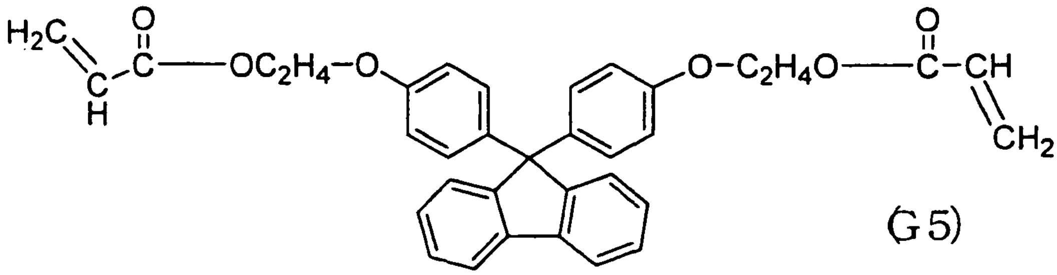

(G5)

Example 6

16 g of 25% by weight of N-methylpyrrolidone(NMP) solution dissolving polymer of Formula (G3) (sulfonic acid group density 1.1mmol/g) obtained in Synthesis example 4, and 0.44 g of HMOM-TPPHBA (available from HONSYU CHEMICAL INDUSTRY CO., LTD.) were mixed, and stirred for an hour at room temperature. The mixed solution was applied onto a glass plate by flow casting, dried for 2 hours at 100°C, and heated at 325°C for 10 minutes under nitrogen, to give a polymer electrolyte membrane. After proton substitution by immersion in 1N hydrochloric acid for one day or more, the membrane was washed well by immersion in excess pure water for one day or more. Then 5cm-squre membrane (3 pieces) was immersed in 1L of pure water for 24 hours and washed well, and immersed in 30% methanol aqueous solution (1L) at 60°C for 12 hours under stirring, and then sufficiently washed by immersion in 1L of pure water for 24 hours or more under stirring.

The obtained membrane was red and clear, and showed sulfonic acid group density of 1.0 mmol/g. Evaluation results are summarized in Table 1. Rw was large, and methanol permeation amount was small.

Example 7

16 g of 25% by weight of N-methylpyrrolidone(NMP) solution dissolving polymer of Formula (G3) (sulfonic acid group density 1.1mmol/g) obtained in Synthesis example 4, and 0.21 g of TML-BPA (available from HONSYU CHEMICAL INDUSTRY CO., LTD.) were mixed, and stirred for an hour at room temperature. The mixed solution was applied onto a glass plate by flow casting, dried for 2 hours at 100°C, and heated at 325°C for 10 minutes under nitrogen, to give a polymer electrolyte membrane. After proton substitution by immersion in 1N hydrochloric acid for one day or more, the membrane was washed well by immersion in excess pure water for one day or more. Then 5cm-squre membrane (3 pieces) was immersed in 1L of pure water for 24 hours and washed well, and immersed in 30% methanol aqueous solution (1L) at 60°C for 12 hours under stirring, and then sufficiently washed by immersion in 1L of pure water for 24 hours or more under stirring.

The obtained membrane was red and clear, and showed sulfonic acid group density of 1.0 mmol/g. Evaluation results are summarized in Table 1. Rw was large, and methanol permeation amount was small.

[Table 1]

| | Membrane thickness (μm) | Rw (%) | Wnf | Proton conductivity ($S\cdot cm^{-2}$) | Permeation amount of methanol ($\mu mol\cdot min^{-1}\cdot cm^{-2}$) | Haze (%) | Weight reduction with respectto NMP (%) | Bending test |
|---|---|---|---|---|---|---|---|---|
| Comparative example 1 | 210 | 47 | 0.19 | 5.8 | 73 | 1 | 1 | A |
| Comparative example 2 | 81 | 72 | 0.35 | 8.2 | 45 | 2 | 100 | A |
| Comparative example 3 | 90 | 52 | 0.31 | 7.6 | 51 | 43 | 100 | A |
| Example 1 | 65 | 99 | 0.21 | 4.0 | 13 | 2 | 100 | A |
| Example 2 | 39 | 100 | 0.19 | 4.8 | 10 | 3 | 100 | A |
| Example 3 | 34 | 100 | 0.16 | 5.0 | 13 | 2 | 100 | A |
| Example 4 | 30 | 97 | 0.19 | 5.6 | 12 | 3 | 16 | A |
| Example 5 | 56 | 97 | 0.18 | 2.7 | 8 | 3 | 11 | A |
| Comparative Example 5 | 33 | 98 | 0.18 | 5.1 | 14 | 2 | 9 | A |
| Comparative Example 6 | 35 | 99 | 0.19 | 5.0 | 13 | 2 | 8 | A |
| Example 6 | 50 | 97 | 0.20 | 3.6 | 8 | 3 | 10 | A |
| Example 7 | 50 | 97 | 0.22 | 5.3 | 15 | 3 | 20 | A |
| Comparative Example 7 | 190 | 75 | 0.30 | 5.6 | 20 | 3 | 0 | C |
| Comparative Example 10 | 76 | 90 | 0.24 | 5.7 | 18 | 1 | 100 | A |
| Comparative Example 11 | 81 | 81 | 0.28 | 8.4 | 31 | 2 | 100 | A |

Comparative Example 7

(Preparation of monomer composition)

A beaker was charged with 13 g of polystyrene, 9 g of N-cyclohexylmaleimide, 6 g of ethyleneglycol dimethacrylate which is a multi-functional monomer, 6 g of propylene carbonate which is a pore-forming agent, and 0.05 g of 2,2'-azobisisobutylonitrile which is a polymerization initiator, and these were dissolved uniformly by stirring with a magnetic stirrer, to prepare a monomer composition solution.

(Cast molding)

A mold in which two glass plates having thickness of 5 mm and size of 30 cm×30 cm were adjusted so that the interval thereof was 0.2 mm by means of a gasket was prepared, and the above monomer composition solution was injected between the glass plates until the gasket is filled with the same.

Then interpolate polymerization was allowed in a hot-air dryer at 65°C for 8 hours, and a polymer in the form of membrane was removed from between the glass plates.

(Making polymer electrolyte membrane)

For removal of the pore-forming agent and introduction of an ionic group, the membrane-like polymer was

immersed in 1,2-dichloroethane adding 5% by weight of chlorosulfonic acid for 30 minutes, and the taken out, and then 1,2-dichloroethane was washed with methanol, and further washed with water until the cleaning liquid was neutral. After Na substitution by immersion in saturated saline, the membrane was dried for 4 hours at 100°C. Further, in nitrogen atmosphere, the temperature was raised from 200 to 300°C over one hour, and a heat treatment at 300°C for 10 minutes was conducted, and the reaction was allowed to cool. Proton substitution by immersion in 1N hydrochloric acid for one day or more, was followed by sufficient washing by immersion in excess amount of pure water for one day or more. Then 5cm-squre membrane (3 pieces) was immersed in 1L of pure water for 24 hours and washed well, and immersed in 30% methanol aqueous solution (1L) at 60°C for 12 hours under stirring, and then sufficiently washed by immersion in 1L of pure water for 24 hours or more under stirring, to give a polymer electrolyte membrane.

Observation of distribution condition of the sulfonic acid groups revealed that the sulfonic acid groups distribute over the entire cross section of the polymer electrolyte membrane, and the ionic groups are introduced in gap. Sulfonic acid group density was 1.6 mmol/g. Evaluation results are summarized in Table 1. Rw was large, and methanol permeation amount was small.

Example 8 and Comparative example 4

Using the polymer electrolyte membrane of Example 1, a polymer electrolyte fuel cell was prepared and evaluated in the following manner. Also from the commercially available Nafion (registered trademark) 117 membrane of Comparative example 1, a polymer electrolyte fuel cell was prepared and evaluated in the same manner.

After subjecting two carbon fiber cloth base materials to water repellent finish by immersion in 20% PTFE water, the materials were calcinated to prepare electrode substrates. On one electrode base material, an anode electrode catalyst application fluid comprising Pt-Ru carrying carbon and a commercially available Nafion (registered trademark) solution (available from Du Pont) was applied and dried, to give an anode electrode, while on the other electrode base material, a cathode electrode catalyst application fluid comprising Pt carrying carbon and Nafion (registered trademark) solution was applied and dried, to give a cathode electrode.

The polymer electrolyte membrane of Example 1 was sandwiched between the anode electrode and the cathode electrode prepared above and pressed under heating, to give a membrane-electrode composite (MEA). This MEA was set in a cell available from ElectroChem Inc.. Before starting evaluation, aging was effected by supplying the anode side with 30% methanol aqueous solution at 60°C, for 100 hours in the electrically-closed circuit condition. In evaluation, MEA evaluation was conducted by supplying the anode with 30% methanol aqueous solution at 20°C and supplying the cathode with air. Evaluation was made by measuring the voltage when a constant current was applied to MEA. The current was sequentially increased until voltage was 10 mV or less. At each measurement point, product of current and voltage is output.

MEA (Example 8) using the polymer electrolyte membrane of Example 1 showed 2.2 times of output (mW/$cm^2$) and 2.5 times of energy capacity (Wh) compared to MEA (Comparative example 4) using Nafion (registered trademark) 117 membrane of Comparative example 1, and exhibited better characteristics.

Example 9

Using the polymer electrolyte membrane of Example 4, a polymer electrolyte fuel cell was prepared and evaluated in the same manner as described in Example 8.

MEA of this Example showed 3.2 times of output (mW/$cm^2$) and 2.8 times of energy capacity (Wh) compared to MEA (Comparative example 4) using Nafion (registered trademark) 117 membrane, and exhibited better characteristics.

Comparative Example 8

Using the polymer electrolyte membrane of Comparative Example 5, a polymer electrolyte fuel cell was prepared and evaluated in the same manner as described in Example 8.

MEA of this Example showed 3.3 times of output (mW/$cm^2$) and 2.3 times of energy capacity (Wh) compared to MEA (Comparative example 4) using Nafion (registered trademark) 117 membrane, and exhibited better characteristics.

Example 10

Using the polymer electrolyte membrane of Example 6, a polymer electrolyte fuel cell was prepared and evaluated in the same manner as described in Example 8.

MEA of this Example showed 2.1 times of output (mW/$cm^2$) and 3.9 times of energy capacity (Wh) compared

to MEA (Comparative example 4) using Nafion (registered trademark) 117 membrane, and exhibited better characteristics.

Comparative Example 9

Using the polymer electrolyte membrane of Comparative Example 7, a polymer electrolyte fuel cell was prepared and evaluated in the same manner as described in Example 8.

MEA of this Example showed 3.3 times of output (mW/cm$^2$) and 1.9 times of energy capacity (Wh) compared to MEA (Comparative example 4) using Nafion (registered trademark) 117 membrane, and exhibited better characteristics.

Synthesis example 8 (not part of the invention)

Synthesis of polymer (sulfonic acid group density 1.2 mmol/g) shown by Formula (G3) below

Using 6.9 g of potassium carbonate, 14.1 g of 4,4'-dihydroxytetraphenylmethane, 5.7 g of 4,4'-difluorobenzophenone, and 5.9 g of disodium 3,3'-disulfonate-4,4'-difluorobenzophenone obtained in the above Synthesis example 1, polymerization was executed in N-methylpyrrolidone(NMP) at 190°C. Purification was conducted by reprecipitation in abundant water, and polymer shown by above Formula (G3) was obtained. A sulfonic acid group density after proton substitution of the obtained polymer was 1.2 mmol/g, weight average molecular weight was 260,000.

Synthesis example 9 (not part of the invention)

Synthesis of polymer (sulfonic acid group density 1.4 mmol/g) shown by Formula (G3) below

Using 6.9 g of potassium carbonate, 14.1 g of 4,4'-dihydroxytetraphenylmethane, 5.2 g of 4,4'-difluorobenzophenone, and 6.8 g of disodium 3,3'-disulfonate-4,4'-difluorobenzophenone obtained in the above Synthesis example 1, polymerization was executed in N-methylpyrrolidone(NMP) at 190°C. Purification was conducted by reprecipitation in abundant water, and polymer shown by above Formula (G3) was obtained. A sulfonic acid group density after proton substitution of the obtained polymer was 1.4 mmol/g, weight average molecular weight was 240,000.

Comparative Example 10

A 20% by weight solution of polymer of Formula (G3) (Na form, sulfonic acid group density 1.2 mmol/g) obtained in Synthesis example 8 in N-methylpyrrolidone as a solvent was prepared, and the solution was solution was applied on a glass substrate by flow casting, and dried for 4 hours at 100°C to remove the solvent. Further, in nitrogen gas atmosphere, the temperature was raised from 200 to 325°C over one hour, and a heat treatment at 325°C for 10 minutes was conducted, and the reaction was allowed to cool. Proton substitution by immersion in 1N hydrochloric acid for one day, was followed by sufficient washing by immersion in excess amount of pure water for one day. Then 5cm-squre membrane (3 pieces) was immersed in 1L of pure water for 24 hours and washed well, and immersed in 30% methanol aqueous solution (1L) at 60°C for 12 hours under stirring, and then sufficiently washed by immersion in 1L of pure water for 24 hours or more under stirring. The obtained membrane was a pale yellow clear soft membrane.

Evaluation results are summarized in Table 1. Rw was large, and methanol permeation amount was small.

Comparative Example 11

A 20% by weight solution of polymer of Formula (G3) (Na form, a sulfonic acid group density 1.4 mmol/g) obtained in Synthesis example 5 in N-methylpyrrolidone as a solvent was prepared, and the solution was solution was applied on a glass substrate by flow casting, and dried for 4 hours at 100°C to remove the solvent. Further, in nitrogen gas atmosphere, the temperature was raised from 200 to 325°C over one hour, and a heat treatment at 325°C for 10 minutes was conducted, and the reaction was allowed to cool. Proton substitution by immersion in 1N hydrochloric acid for one day or more, was followed by sufficient washing by immersion in excess amount of pure water for one day or more. Then 5cm-squre membrane (3 pieces) was immersed in 1L of pure water for 24 hours and washed well, and immersed in 30% methanol aqueous solution (1L) at 60°C for 12 hours under stirring, and then sufficiently washed by immersion in 1L of pure water for 24 hours or more under stirring. The obtained membrane was a pale yellow clear soft membrane.

Evaluation results are summarized in Table 1. Rw was large, and methanol permeation amount was small.

INDUSTRIAL APPLICABILITY

The polymer electrolyte material of the present invention or the polymer electrolyte part may be applicable to a variety of use applications. For example, they may be applied to medical applications such as extracorporeal circulation column and artificial skin, filtration applications, ion exchange applications, various structural material applications, and electrochemical applications. For example, as the electrochemical applications, fuel cell, redox flow cell, hydrolysis device and chloroalkaline electrolysis device are recited, and among these, a fuel cell is particularly preferred, and exemplary application includes a direct fuel cell using methanol or the like as a fuel.

Power supply source for mobile objects is a preferred application of the polymer electrolyte fuel cell of the present invention. In particular, it is preferably used as power source, as a conventional primary cell such as stationary power generator, alternative of secondary cell, or as a hybrid power source therewith in mobile devices such as portable phone, personal computer, PDA (Portable Digital Assistance), TV set, radio, music player, game machine, head set, DVD player, video camera (camcorder) and digital camera, consumer electronics such as electronic shaver and cordless cleaner, a variety of humanoid or animal-like robots, for example, for industrial purposes, electronic tools, automobiles such as passenger automobile, bus and truck, two-wheeled vehicle, electrically-assisted bicycle, electric cart, electric wheelchair, and moving bodies such as boats and ships and rail vehicles.

## Claims

1. A polymer electrolyte material, wherein fraction Rw of non-freezing water shown by the equation (S1) below is 75 to 100% by weight, and ionic group is included, in a moisture state taken out after 12-hour immersion in 1 to 30% by weight methanol aqueous solution at 40 to 80°C and then 24-hour immersion in pure water at 20°C:

$$Rw=[Wnf/(Wfc+Wnf)]\times 100 \quad ......(S1)$$

(wherein, Wnf represents an amount of non-freezing water per 1 g of dry weight of polymer electrolyte material, and Wfc represents an amount of lower-melting point water per 1 g of dry weight of polymer electrolyte material), wherein, the polymer electrolyte material comprises a hydrocarbon polymer having an ionic group,
wherein, the hydrocarbon polymer having an ionic group comprises a structure shown by Formula (P1):

$$-\left[Z^1-Y^1\right]_a\left[Z^2-Y^2\right]_b- \quad (P1)$$

(wherein $Z^1$ and $Z^2$ represent an organic group-containing an aromatic ring, each of which may represent two or more kinds of groups by one symbol; $Y^1$ represents CO, $Y^2$ represents O or S, each of a and b independently represents an integer of 0 to 2, provided that a and b do not 0 at the same time),
wherein the ionic group is a sulfonic acid group, and **characterized in that** the density of sulfonic acid group is 0. 3 to 1.18 mmol/g.

2. The polymer electrolyte material according to claim 1, wherein the Rw is 75 to 100% by weight in a moisture state taken out after 12-hour immersion in 1 to 30% by weight methanol aqueous solution at 60°C and 24-hour immersion in pure water at 20°C.

3. The polymer electrolyte material according to claim 1, wherein an amount of the non-freezing water (Wnf) is 0.05 to 2.

4. The polymer electrolyte material according to claim 1, further comprising a heterocyclic polymer.

5. The polymer electrolyte material according to claim 1, further comprising a vinyl polymerization polymer.

6. The polymer electrolyte material according to claim 1, wherein the polymer electrolyte material is cross-linked by a cross-linking compound shown by Formula (M1):

$-CH_2OU^1$ (M1)

(wherein $U^1$ represents a hydrogen or an arbitrary organic group.)

**7.** The polymer electrolyte material according to claim 1, having a gap, a porosity of 5 to 80% and average pore size of the gap of less than 50 nm is formed, and wherein the ionic group exists in the gap.

**8.** A polymer electrolyte part formed by using the polymer electrolyte material described in Claim 1.

**9.** A membrane electrode assembly formed by using the polymer electrolyte part described in Claim 8.

**10.** A polymer electrolyte fuel cell formed by using the membrane electrode assembly described in Claim 9.

**11.** The polymer electrolyte fuel cell according to Claim 10, wherein the polymer electrolyte fuel cell is a direct fuel cell which uses at least one selected from organic compounds having 1 to 6 carbon(s) and mixtures thereof with water, as a fuel.

**Patentansprüche**

**1.** Ein Polymer-Elektrolytmaterial, wobei ein Bruchteil Rw des nicht gefrierenden Wassers, der durch die Gleichung S1 unten dargestellt ist, 75 bis 100 Gew.-% beträgt, und eine ionische Gruppe in einem Feuchtzustand umfasst, die nach einer 12-stündigen Eintauchung in einer 1 bis 30 Gew-%igen wässrigen Methanollösung bei 40 bis 80°C herausgenommen wird, und dann 24 Stunden in Reinwasser bei 20°C eingetaucht wird:

$$Rw = [Wnf/(Wfc + Wnf)] \times 100 \quad ..... (F1),$$

- wobei Wfn eine Größe von nicht gefrierendem Wasser pro 1 g des Trockengewichts des Polymer-Elektrolytmaterials darstellt, und
- Wfc eine Größe des Wassers mit tieferem Schmelzpunkt pro 1 g des Trockengewichts des Polymer-Elektrolytmaterials darstellt), wobei das Polymer-Elektrolytmaterial ein Kohlenwasserstoffpolymer mit einer ionischen Gruppe aufweist,
- wobei das Kohlenwasserstoffpolymer mit einer ionischen Gruppe eine Anordnung aufweist, die durch die Formel (P1) dargestellt wird:

$$[Z^1\text{-}Y^1]_a \text{ -- } [Z^2\text{-}Y^2]_b \qquad (P1)$$

- (wobei $Z^1$ und $Z^2$ eine organische Gruppe, die einen aromatischen Ring enthält, darstellt, wobei jede von ihnen zwei oder mehrere Arten von Gruppen durch ein Symbol darstellt; $Y^1$ CO darstellt, $Y^2$ O oder S darstellt, jeder Buchstabe a und b unabhängig eine ganze Zahl von 0 bis 2 darstellt, die vorgesehen sind, dass a und b nicht gleichzeitig 0 sind),
- wobei die ionische Gruppe eine Sulphonsäuregruppe ist, und **dadurch gekennzeichnet ist, dass** die Dichte der Sulphonsäuregruppe 0,3 bis 1,18 mmol/g beträgt.

**2.** Polymer-Elektrolytmaterial gemäß Anspruch 1, wobei der Bruchteil Rw 75 bis 100 Gew.-% in einem Feuchtezustand beträgt, der nach einer 12-stündigen Eintauchung in einer 1 bis 30 Gew.-%igen wässrigen Methanollösung bei 60°C und 24-stündigem Eintauchen in Reinwasser bei 20°C herausgenommen wird.

**3.** Polymer-Elektrolytmaterial gemäß Anspruch 1, wobei eine Größe des nicht gefrierenden Wassers (Wnf) 0,05 bis 2 beträgt.

**4.** Polymer-Elektrolytmaterial gemäß Anspruch 1, das ferner ein heterocyclisches Polymer aufweist.

**5.** Polymer-Elektrolytmaterial gemäß Anspruch 1, das ferner ein Vinyl-Polymerisations-Polymer aufweist.

**6.** Polymer-Elektrolytmaterial gemäß Anspruch 1, wobei das Polymer-Elektrolytmaterial durch ein Vernetzungs-Compound vernetzt ist, das durch die Formel (M1) dargestellt wird:

$$-CH_2OU^1 \qquad (M1)$$

(wobei $U^1$ einen Wasserstoff oder eine beliebige organische Gruppe darstellt).

**7.** Polymer-Elektrolytmaterial gemäß Anspruch 1 mit einem Zwischenraum, einer Porosität von 5 bis 80% und wobei die durchschnittliche Porengröße des Zwischenraums mit weniger als 50 nm gebildet wird, und wobei die ionische Gruppe im Zwischenraum vorhanden ist.

**8.** Polymer-Elektrolytteil, das unter Verwendung des Polymer-Elektrolytmaterials, das in Anspruch 1 beschrieben ist, gebildet wird.

**9.** Membran-Elektroden-Einheit, das unter Verwendung des Polymer-Elektrolytteils, das in Anspruch 8 beschrieben ist, gebildet wird.

**10.** Polymer-Elektrolyt-Brennstoffzelle, die unter Verwendung der Membran-Elektroden-Einheit, die in Anspruch 9 beschrieben ist, gebildet wird.

**11.** Polymer-Elektrolyt-Brennstoffzelle gemäß Anspruch 10, wobei die Polymer-Elektrolyt-Brennstoffzelle eine direkte Brennstoffzelle ist, die zumindest 1 Compound, das aus den organischen Compounds mit 1 bis 6 Kohlenstoffen und Mischungen davon mit Wasser ausgewählt wird, als Brennstoff verwendet.

## Revendications

**1.** Matériau électrolyte polymère, dans lequel la fraction Rw d'eau non congelée obtenue par l'équation (S1) ci-dessous est de 75 % en poids à 100 % en poids, et un groupe ionique est inclus, dans un état d'humidité pris après 12 heures d'immersion dans une solution aqueuse contenant 1 % en poids à 30 % en poids de méthanol entre 40 °C et 80 °C et 24 heures d'immersion dans de l'eau pure à 20°C :

$$Rw = [Wnf/(Wfc + Wnf)] \times 100 \ldots\ldots (S1)$$

(où Wnf représente une quantité d'eau non congelée pour 1 g de poids sec de matériau électrolyte polymère, et Wfc représente une quantité d'eau à point de fusion plus bas pour 1 g de poids sec de matériau électrolyte polymère), dans lequel le matériau électrolyte polymère comprend un polymère d'hydrocarbure contenant un groupe ionique,
dans lequel le polymère d'hydrocarbure contenant un groupe ionique possède une structure représentée par la formule (P1) :

$$-\left[Z^1-Y^1\right]_a\left[Z^2-Y^2\right]_b- \qquad (P1)$$

(où $Z^1$ et $Z^2$ représentent un groupe organique contenant un cycle aromatique, l'un comme l'autre pouvant représenter deux ou plus de deux types de groupe par un symbole ; $Y^1$ représente CO, $Y^2$ représente O ou S, a et b représentent chacun indépendamment un nombre entier allant de 0 à 2, à condition que a et b ne soient pas égaux à 0 en même temps),
dans lequel le groupe ionique est un groupe acide sulfonique et est **caractérisé en ce que** la densité du groupe acide sulfonique est de 0,3 mmol/g à 1,18 mmol/g.

**2.** Matériau électrolyte polymère selon la revendication 1, dans lequel la valeur de Rw va de 75 % en poids à 100 % en poids dans un état d'humidité pris après 12 heures d'immersion dans une solution aqueuse contenant 1 % en poids à 30 % en poids de méthanol à 60 °C et 24 heures d'immersion dans de l'eau pure à 20 °C.

**3.** Matériau électrolyte polymère selon la revendication 1, dans lequel une quantité d'eau non congelée (Wnf) est de 0,05 à 2.

**4.** Matériau électrolyte polymère selon la revendication 1, comprenant en outre un polymère hétérocyclique.

**5.** Matériau électrolyte polymère selon la revendication 1, comprenant en outre un polymère obtenu par la polymérisation du vinyle.

**6.** Matériau électrolyte polymère selon la revendication 1, dans lequel le matériau électrolyte polymère est réticulé par un composé de réticulation représenté par la formule (M1) :

$$-CH_2OU^1 \qquad (M1)$$

(où $U^1$ représente un hydrogène ou un groupe organique arbitraire).

**7.** Matériau électrolyte polymère selon la revendication 1, présentant un espace, une porosité de 5 % à 80 % et une taille moyenne de pore de l'espace inférieure à 50 nm est formée, et dans lequel le groupe ionique existe dans l'espace.

**8.** Pièce en électrolyte polymère, formée au moyen du matériau électrolyte polymère selon la revendication 1.

**9.** Ensemble électrode à membrane, formé au moyen de la pièce en électrolyte polymère selon la revendication 8.

**10.** Pile à combustible à électrolyte polymère, formée au moyen de l'ensemble électrode à membrane selon la revendication 9.

**11.** Pile à combustible à électrolyte polymère selon la revendication 10, dans laquelle la pile à combustible à électrolyte polymère est une pile à combustible direct qui utilise, comme combustible, au moins un choisi parmi des composés organiques contenant 1 à 6 carbones et mélange de ceux-ci avec de l'eau.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 200291225 A
- US 5403675 A
- JP 2002226575 A
- JP A2002524631 W
- US 6103414 A
- JP A2001504636 W
- JP 2002260687 A
- JP 2002110200 A
- JP 2003012835 A
- US 20040039148 A
- JP 2016126 A
- JP 2208322 A
- JP 2001192531 A
- JP 2002293889 A


### Non-patent literature cited in the description


- *Polymer,* 1987, vol. 28, 1009
- *Journal of membrane Science,* 1993, vol. 83, 211-220
- *Journal of Applied Polymer Science,* 1999, vol. 71, 387-399
- *Journal of membrane Science,* 2002, vol. 197, 231-242
- *Polymers,* 2002, vol. 43, 2311-2320
- *Journal of material Chemistry,* 2002, vol. 12, 834-837
- *Journal of Colloid and Interface Science,* 1995, vol. 171, 92-102
- *Polymer Preprints, Japan,* 2002, vol. 51, 750
- *J. Electrochem. Soc.,* 1996, vol. 143 (9), 2795-2799
- **J.BRANDRUP.** POLYMER HANDBOOK
- *Electrochemistry,* 1985, vol. 53, 269
- *J. Electrochem. Soc.): Electrochemical Science and Technology,* 1988, vol. 135 (9), 2209